# EUROPEAN PATENT SPECIFICATION

(11) **EP 3 054 820 B1**
(45) Date of publication and mention of the grant of the patent: **24.02.2021**
(21) Application number: 14852700.5
(22) Date of filing: 07.10.2014
(51) Int. Cl.: A47J 27/00, A47J 27/08, A47J 27/086, A47J 27/09, A47J 36/32

(54) **APPARATUS FOR COOKING A FOOD ITEM**
VORRICHTUNG ZUM KOCHEN EINES NAHRUNGSMITTELS
APPAREIL DE CUISSON D'UNE DENRÉE ALIMENTAIRE

(30) Priority: 09.10.2013 US 201361888763 P
(43) Date of publication of application: 17.08.2016
(73) Proprietor: Instant Brands Inc., Ottawa, Ontario K2T 1C1 (CA)
(72) Inventor: WANG, Jiwei R., Kanata, Ontario K2K 3L5 (CA); PENG, Jun-Fei, Beijing 100096 (CN)
(74) Representative: McQueen, Andrew Peter
(86) International application number: PCT/CA2014/000731
(87) International publication number: WO 2015/051446

(56) References cited:
- EP-A1- 2 594 169
- WO-A1-2013/064347
- CN-U- 203 138 045
- US-A1- 2002 050 211
- US-A1- 2003 173 352
- US-A1- 2004 032 421
- US-B1- 6 283 014

## Description

### TECHNICAL FIELD

Some aspects are generally related to an apparatus for cooking a food item. More specifically, some aspects provide an apparatus having a pressure-cooking appliance. More specifically, some aspects provide for a system for the management of a cooking script usable by a cooking controller of a cooking appliance (a pressure-cooking appliance).

### BACKGROUND

Cooking appliances (such as, a rice cooker, an electric pressure cooker and/or a slow cooker) are known. Some cooking appliances may include touch control interfaces that may improve ease of use.

CN 203 138 045 U describes an apparatus for pressure-cooking food that comprises an inner vessel housed in an outer casing with a lid, a microcomputer controller and a heating element, and having a first temperature sensor on the heating element, and a second temperature sensor on the lid. The sensor arrangement detects if there is a reduced boiling point of food contents due to reduced atmospheric pressure at higher altitudes and the controller adjusts the cooking program according to the altitude.

### SUMMARY

At least one problem is associated with known cooking appliances. After much study, it is believed that an understanding of the problem and its solution have been arrived at, which are stated below.

A cooking script is a sequence of instructions that define a cooking process. The cooking script includes executable code (instruction) to be executed by a controller of a cooking appliance. The cooking process identified in the cooking script is to be executed by the controller of the cooking appliance. This is done in such a way that the cooking operation of the cooking appliance is controlled in accordance with the sequence of instructions provided by the cooking script. The cooking process is executed by the controller in such a way that a specific cooking result is achieved by the cooking appliance.

A first problem is that many cooking appliances with built-in cooking scripts may provide an inaccurate and/or a limited function that may fail to emulate real-world cooking processes that may require multiple steps for cooking food. Some cooking scripts may ask for a combination of those programs in multiple steps. The following example (on meat cooking) shows exactly this case. For instance, for the case where a cooking script provides instructions for cooking meat at high pressure for 35 minutes may accidentally overcook the lean meat portion and make it tough to eat once cooked. The correct way may be to cook the meat for 15 minutes at a higher pressure, followed by 25 minutes at medium or lower pressure (for a better result). Additionally, a large variety of cooking methods may be accommodated. For example, Indian kidney bean curry is made after an overnight soaking of the beans, followed by pressure cooking to soften the beans, then mixing the cooked beans with sautéed onions, tomatoes and herbs, and followed by further cooking of the mixture at a slow simmer on for about two to three hours. A second problem is that the same cooking script may require different cooking parameters based on the location of the cooking appliance the altitude of the cooking appliance, the weather condition of the location of the cooking appliance, and/or a food material size, the weight of a food item to be placed in the cooking appliance, etc. Other problems are discussed in the Detailed Description.

In order to mitigate, at least in part, some of the problems identified above, there is provided:
an apparatus for cooking a food item according to claim 1; and
a metlhod of operating an apparatus for cooking a food item according to claim 13.

Deleted.

Deleted.

Deleted.

Deleted.

Deleted.

Other aspects (options, variations) are identified in the dependent claims.

Other aspects and features of the non-limiting embodiments (aspects, variations, options) of the apparatus may now become apparent to those skilled in the art upon review of the following detailed description of the non-limiting embodiments with the accompanying drawings.

### BRIEF DESCRIPTION OF THE DRAWINGS

The non-limiting embodiments may be more appreciated by reference to the following detailed description of the non-limiting embodiments when taken in conjunction with the accompanying drawings, in which:
FIG. 1A depicts a schematic representation of an embodiment of a pressure-cooking appliance;
FIG. 1B depicts an exploded perspective view of an embodiment of the pressure-cooking appliance of FIG. 1A;
FIG. 1C depicts a schematic representation of an embodiment of the pressure-cooking appliance of FIGS. 1A and/or 1B;
FIG. ID depicts schematic embodiments of the pressure-cooking appliance of FIG. 1C;
FIG. 2 depicts schematic representations of embodiments of the pressure-cooking appliance of FIG. 1C for use with embodiments of the pressure-cooking appliance of FIGS. 1A and/or 1B;
FIG. 3 depicts a schematic representation of an embodiment of the pressure-cooking appliance of FIG. 1C for use with embodiments of the pressure-cooking appliance of FIGS. 1A and/or 1B;
FIG. 4 depicts a schematic representation of an embodiment of the pressure-cooking appliance of FIG. 1C for use with embodiments of the pressure-cooking appliance of FIGS. 1A and/or 1B; and
FIG. 5 depicts a schematic representation of a cooking script to be used by the pressure-cooking appliance of FIG. 1C, and the embdiments of the pressure-cooking appliance of FIGS. 2, 3 and 4.

The drawings are not necessarily to scale and may be illustrated by phantom lines, diagrammatic representations and fragmentary views. In certain instances, details not necessary for an understanding of the embodiments (and/or details that render other details difficult to perceive) may have been omitted.

Corresponding reference characters indicate corresponding components throughout the several figures of the Drawings. Elements in the several figures are illustrated for simplicity and clarity and have not necessarily been drawn to scale. For example, the dimensions of some of the elements in the figures may be emphasized relative to other elements for facilitating understanding of the various presently disclosed embodiments. In addition, common, but well-understood, elements that are useful or necessary in commercially feasible embodiments are often not depicted in order to facilitate a less obstructed view of the various embodiments of the present disclosure.

### LISTING OF REFERENCE NUMERALS USED IN THE DRAWINGS

- 100: apparatus
- 102: pressure-cooking appliance
- 104: base assembly
- 106: housing assembly
- 108: cooking controller
- 110: user interface
- 112: outer pot
- 114: removable inner cooking pot
- 116: lid assembly
- 118: handle assembly
- 120: pressure relief valve
- 201: network connection
- 202: user-control device
- 204: memory unit
- 206: network connection
- 208: memory unit
- 210: network server
- 212: memory unit
- 214: network connection
- 216: network connection
- 218: cooking script
- 224: validation server
- 226: memory unit
- 228: network connection
- 230: network connection
- 301: cooking elements
- 302: heating assembly
- 304: thermal sensor
- 306: pressure sensor
- 307: humidity sensor
- 308: lid lock switch
- 310: power switch
- 312: power sensor
- 314: heat control element
- 316: safety controller
- 318: memory unit
- 320: recipe controller
- 322: memory unit
- 324: network connection
- 402: field
- 404: field
- 406: field
- 408: field
- 410: field
- 412: field
- 414: field
- 502: weather server
- 504: memory unit
- 506: weather information
- 508: network connection
- 510: memory unit
- 511: network connection
- 512: position server
- 514: position information
- 516: network connection
- 518: network connection
- 520: food-attribute equipment
- 522: attribute
- 524: information
- 600: apparatus
- 602: computer processing unit
- 604: network connection
- 606: memory unit
- 608: network connection

### DETAILED DESCRIPTION OF THE EXEMPLARY EMBODIMENTS

The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure, which is defined by the claims. For purposes of the description herein, the terms "upper," "lower," "left," "rear," "right," "front," "vertical," "horizontal," and derivatives thereof shall relate to the examples as oriented in the drawings. Furthermore, there is no intention to be bound by any expressed or implied theory presented in the preceding technical field, background, brief summary or the following detailed description. It is also to be understood that the specific devices and processes illustrated in the attached drawings, and described in the following specification, are simply exemplary embodiments (examples). Hence, specific dimensions and other physical characteristics relating to the embodiments disclosed herein are not to be considered as limiting, unless the claims expressly state otherwise. It is understood that "at least one" is equivalent to "a".

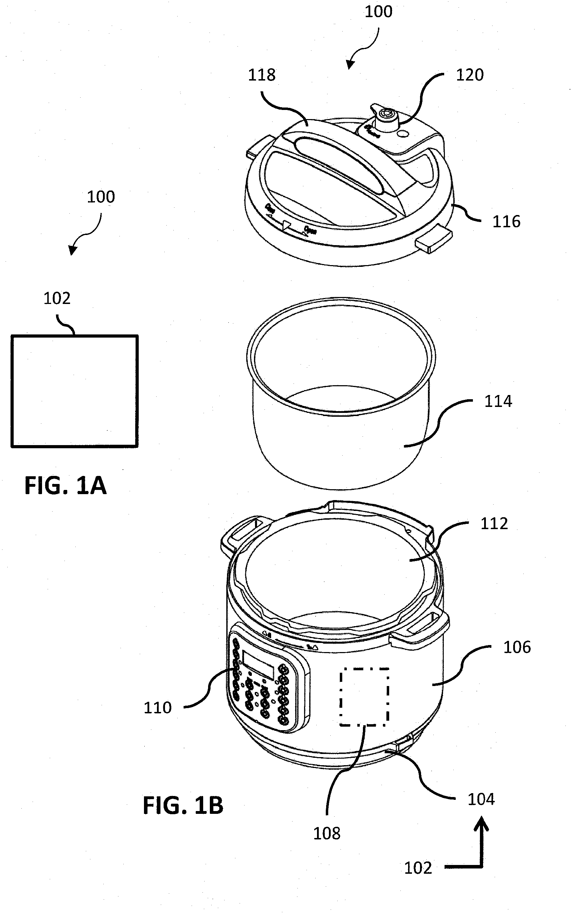

FIG. 1A depicts a schematic representation of a generic example of a pressure-cooking appliance 102.

The pressure-cooking appliance 102 is an appliance configured to: (A) prepare food, and (B) perform a particular job (function) in a domestic setting (the home), a commercial setting (such as, a restaurant), and/or an industrial setting (such as, a food manufacturing facility). Examples of the pressure-cooking appliance 102 may include (and are not limited to): (A) a rice cooker; (B) a porridge maker; (C) a pressure cooker; (D) a slow cooker; a yogurt maker; (E) a sous vide water oven, etc., (F) an electric pressure cooker (a cooking appliance configured to cook under pressure) and any equivalent of the above. It will be appreciated that there are many other examples of the pressure-cooking appliance 102.

FIG. 1B depicts an exploded perspective view of a specific example of the pressure-cooking appliance 102 of FIG. 1A.

As depicted in FIG. 1B, the pressure-cooking appliance 102 includes an electric pressure cooker or a rice cooker appliance. By way of example, the cooking appliance of FIG. 1B includes a base assembly 104 configured to rest on a flat surface (such as, a kitchen countertop or a tabletop). A housing assembly 106 is received by the base assembly 104. The housing assembly 106 is supported by the base assembly 104. A cooking controller 108 is housed in the interior of the housing assembly 106. The cooking controller 108 is connected to various components and/or assemblies of the pressure-cooking appliance 102. Generally speaking, the cooking controller 108 is configured to control cooking operations of the pressure-cooking appliance 102.

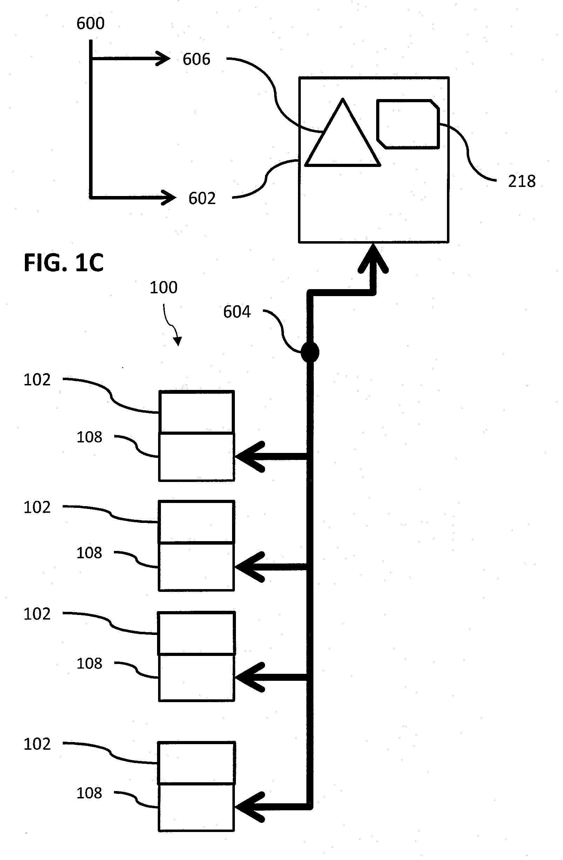

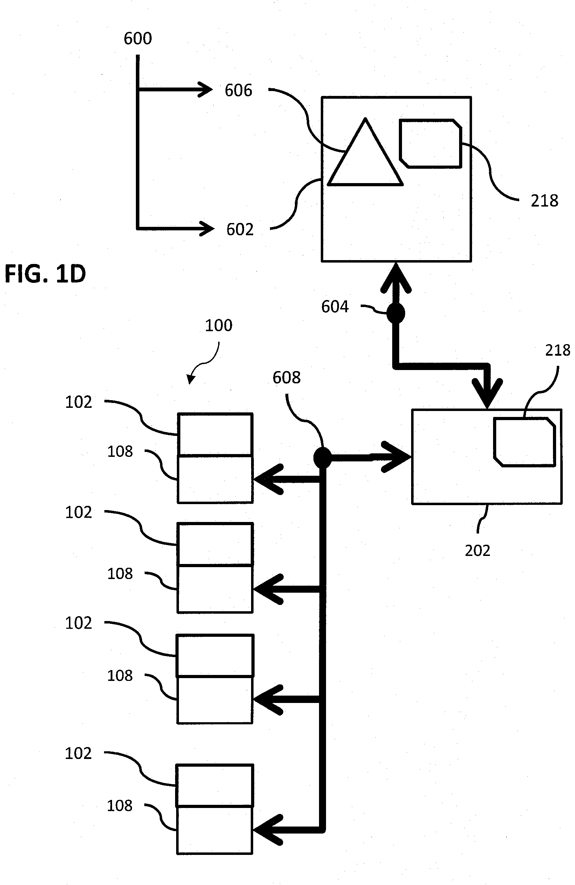

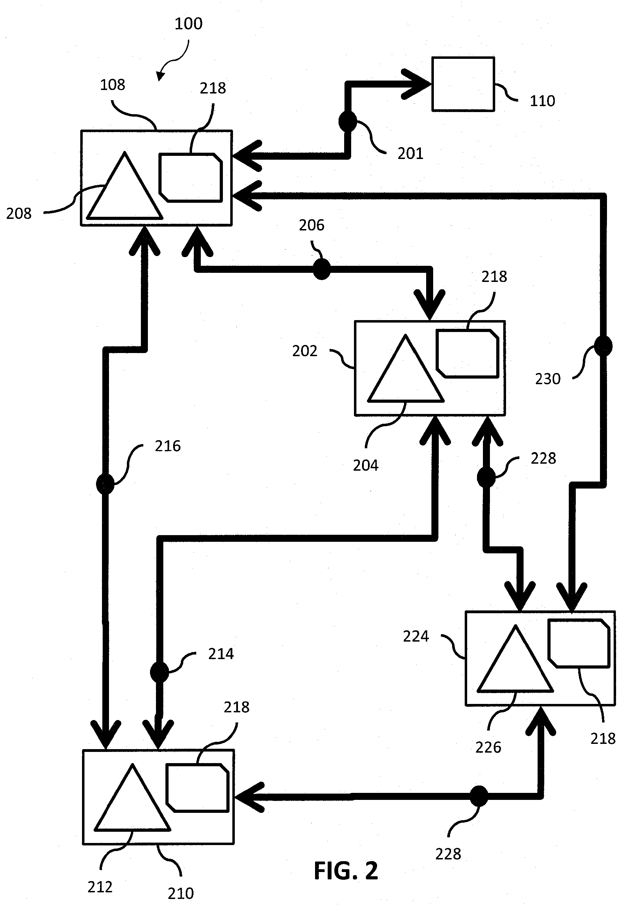

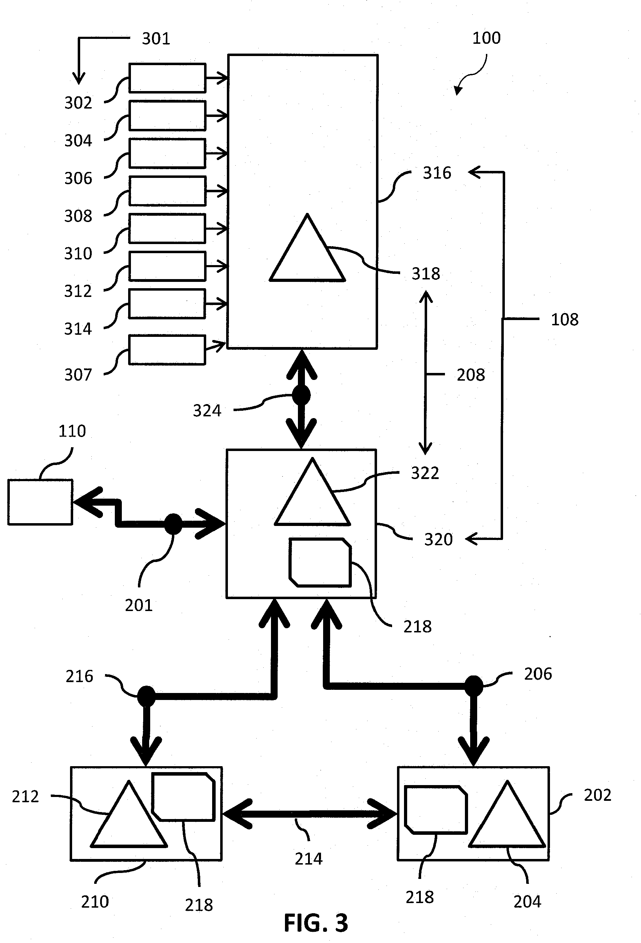

The apparatus 100 is for cooking a food item. The apparatus 100 includes (and is not limited to) the pressure-cooking appliance 102 (depicted in FIGS. 1A, 1B, 1C and 1D). The pressure-cooking appliance 102 includes (and is not limited to) the housing assembly 106 (depicted in FIG. 1B), a heating assembly 302 (depicted in FIG. 3), an outer pot 112 (depicted in FIG. 1B), a removable inner cooking pot 114 (depicted in FIG. 1B), a lid assembly 116 (depicted in FIG. 1B), a sensor assembly (depicted in FIG. 3), a cooking controller 108 (depicted in FIGS. 1B, 1C, 1D, 2, 3 and 4), and a memory unit 204 (depicted in FIGS. 2, 3 and 4). In accordance with the embodiment as depicted, the sensor assembly (depicted in FIG. 3) includes a combination of a thermal sensor 304 and a pressure sensor 306 and a humidity sensor 307. The heating assembly 302 is operatively positioned in the housing assembly 106. The outer pot 112 is operatively received by the housing assembly 106. The outer pot 112 is positioned adjacent to the heating assembly 302.The removable inner cooking pot 114 defines an interior. The removable inner cooking pot 114 is selectively removable from and insertable to the outer pot 112 of the housing assembly 106. The outer pot 112 is positioned (at least in part) between and separates (at least in part) the removable inner cooking pot 114 from the heating assembly 302 once the removable inner cooking pot 114 is inserted into the outer pot 112. The removable inner cooking pot 114 is configured to pressure cook the food item received in the interior of the removable inner cooking pot 114. The lid assembly 116 is configured to be operatively connectable to the housing assembly 106. The lid assembly 116 is configured to selectively operatively securely close the interior the removable inner cooking pot 114 once the food item is operatively received in the interior of the removable inner cooking pot 114. The sensor assembly (the thermal sensor 304 and the pressure sensor 306) is operatively positioned relative to the housing assembly 106. The sensor assembly (the thermal sensor 304 and the pressure sensor 306) is configured to monitor a sensed attribute regarding an attribute of the interior of the removable inner cooking pot 114 operatively received by the outer pot 112. The cooking controller 108 is operatively positioned relative to the housing assembly 106. The cooking controller 108 is operatively connected to the heating assembly 302 and to the sensor assembly (the thermal sensor 304 and the pressure sensor 306). The cooking controller 108 is configured to control the heating assembly 302 in accordance with a heating duration, a heating intensity and the sensed attribute provided by the sensor assembly (the thermal sensor 304 and the pressure sensor 306). The cooking controller 108 is configured to operatively connect to a computer processing unit 602. This is done in such a way that the cooking controller 108 receives a cooking script 218 from the computer processing unit 602. The cooking script 218 is depicted in FIGS. 1C, 1D, 2, 3, 4 and 5. The cooking script 218 having a set of controller-executable instructions configured to direct the cooking controller 108 to pressure cook the food item received in the removable inner cooking pot 114 in accordance to the set of controller-executable instructions. The memory unit 204 is operatively positioned relative to the cooking controller 108. The memory unit 204 is operatively connected to the cooking controller 108. The memory unit 204 is configured to tangibly store a cooking script 218. The cooking script 218 has the set of controller-executable instructions. The set of controller-executable instructions are configured to direct the cooking controller 108 to pressure cook the food item received in the removable inner cooking pot 114 in accordance to the set of controller-executable instructions.

In accordance with an embodiment, the lid assembly 116 (depicted in FIG. 1B) includes a lid safety sensor (known and not depicted). The lid safety sensor is operatively connected to the cooking controller 108. This is done in such a way that the cooking controller 108 prevents inadvertent opening of the lid assembly 116 for the case where the internal pressure of the removable inner cooking pot 114 is above an acceptable release condition.

In accordance with an embodiment, the sensor assembly includes a combination of the thermal sensor 304 and the pressure sensor 306 (both depicted in FIG. 3). The sensor assembly is configured to monitor a sensed attribute regarding an attribute of the interior of the removable inner cooking pot 114. Examples of the attribute includes: (A) the food item contained in the removable inner cooking pot 114, and/or (B) an environmental attribute (such as, pressure and humidity, etc.) of the interior of the removable inner cooking pot 114. The sensed attribute provided by the sensor assembly (the thermal sensor 304 and the pressure sensor 306) includes temperature, pressure, and/or humidity, etc.

In accordance with an embodiment, the cooking controller 108 is configured to operationally connect (wirelessly or with wire) to a computing device (such as, a smartphone and/or a tablet device, etc.). The cooking controller 108 is configured to operationally wirelessly connect to a computer processing unit 602.

In view of the above, there is provided a method for operating the apparatus 100 configured to cook the food item. The method includes (and is not limited to) an operation (A) and an operation (B). The operation (A) includes operatively connecting the cooking controller 108 to a computer processing unit 602; this is done in such a way that the cooking controller 108 receives a cooking script 218 from the computer processing unit 602. The cooking script 218 has the set of controller-executable instructions configured to direct the cooking controller 108 to pressure cook the food item received in the removable inner cooking pot 114 in accordance to the set of controller-executable instructions. The operation (B) includes executing the cooking script 218 having the set of controller-executable instructions in such a way that the cooking controller 108 is directed to pressure cook the food item received in the removable inner cooking pot 114 in accordance to the set of controller-executable instructions.

In accordance with an embodiment, the cooking controller 108 (depicted in FIGS. 1B, 1C, 1D, 2, 3 and 4) is further configured to wirelessly receive the cooking script 218 transmitted from the computer processing unit 602 (such as, a smartphone, a tablet, etc.). The cooking controller 108 is further configured to store the cooking script 218 that was wirelessly received from the computer processing unit 602 to the memory unit 212. The cooking script 218 is configured to direct the cooking controller 108 to cook the food item based on sensor readings provided by the sensor in accordance with the instructions contained in the cooking script 218.

The cooking script 218 (depicted in FIGS. 1C, 1D, 2, 3, 4 and 5) is further configured to be adjustable (such as, adjustable by the cooking controller 108, a smartphone, a cell phone, a tablet and/or the computer processing unit 602) based on the following conditions: (A) the environment information including elevation of the pressure-cooking appliance 102; (B) current weather conditions associated with the pressure-cooking appliance 102 (such as, atmospheric pressure and humidity); and preferably (C) condition of the food item (such as, variety, weight, chopped size, volume, and/or frozen/unfrozen, and/or desired taste including doneness, thickness of liquid and/or texture, ete.).

The cooking script 218 (depicted in FIGS. 1C, ID, 2, 3, 4 and 5) is tangibly stored in the memory unit 204. The cooking script 218 is further configured to control operation of the cooking controller 108. This is done in such a way as to adapt operating time and/or heating intensity of the pressure-cooking appliance 102. This is done in response to the cooking controller 108 receiving a sensor reading from the sensor. For instance, the sensor reading includes any one or more of a temperature reading, a pressure reading, a humidity reading, etc.

In accordance with an embodiment, the cooking script 218 (depicted in FIGS. 1C, 1D, 2, 3, 4 and 5) is further configured to adjust any one of a cooking pressure, a cooking time, and a combination of the cooking pressure and the cooking time of the removable inner cooking pot 114 by taking into account the pressure inside the removable inner cooking pot 114 and the environment pressure surrounding an exterior of the pressure-cooking appliance 102.

The cooking script 218 (depicted in FIGS. 1C, 1D, 2, 3, 4 and 5) is further configured to adjust any one of a cooking pressure, a cooking time, and a combination of the cooking pressure and the cooking time of the pressure-cooking appliance 102. For instance, this is done in such a way that the adjustments are based on barometric pressure. For instance, this is done in such a way that the adjustments are calculated with local weather conditions. For instance, this is done in such a way that the adjustments are calculated with altitude of the pressure-cooking appliance 102 obtained from global positioning system (GPS) data (that may be provided by the smartphone or the tablet device, etc.).

In accordance with an embodiment, the cooking script 218 (depicted in FIGS. 1C, 1D, 2, 3, 4 and 5) further includes cooking parameters. The cooking parameters are modifiable based on current environment surrounding the pressure-cooking appliance 102.

The cooking script 218 (depicted in FIGS. 1C, 1D, 2, 3, 4 and 5) is further configured to be prepared (written) by users (user-created recipes). The cooking script 218 is network shared with other users (such as, via e-mail, file servers, web servers, etc.). The cooking script 218 is further configured to be network shared with other users having their own instance of the pressure-cooking appliance 102.

In accordance with an embodiment, the cooking controller 108 (depicted in FIGS. 1B, 1C, 1D, 2, 3 and 4) is further configured to receive additional cooking procedures. The cooking procedures are to be (dynamically) uploaded and executed (to another compter system). The cooking controller 108 is further configured to receive additional cooking procedures to be uploaded to the computer processing unit 602 and to be executed by another instance of the pressure-cooking appliance 102.

In accordance with an embodiment, the cooking controller 108 (depicted in FIGS. 1B, 1C, 1D, 2, 3 and 4) further includes a safety controller 316 configured to maintain a level of safety for the pressure-cooking appliance 102.

In accordance with an embodiment, the cooking controller 108 (depicted in FIGS. 1B, 1C, 1D, 2, 3 and 4) further includes the recipe controller 320 and the safety controller 316. The recipe controller 320 is configured to: (A) receive the cooking script 218 having cooking instructions, (B) execute the cooking script 218, and (C) instruct the safety controller 316 to execute the cooking script 218 to cook the food item received in the interior of the removable inner cooking pot 114 (this is done in such a way that the safety controller 316 carries out a cooking operation on the food item). The safety controller 316 is configured to: (A) receive the cooking instuctions from the recipe controller 320, (B) execute the cooking instructions received from the recipe controller 320 in such a way that the food item received in the removable inner cooking pot 114 is cooked in accordance with the cooking instructions, (C) maintain a level of safety for the pressure-cooking appliance 102, (D) monitor operation of the recipe controller 320, and (E) reset the recipe controller 320 once expected responses are not provided by and received from the recipe controller 320.

In accordance with an embodiment, the cooking script 218 (depicted in FIGS. 1C, 1D, 2, 3, 4 and 5) is further configured to be validated by a cooking-script validation service. The cooking-script validation service is configured to: (A) ensure the cooking script 218 is safe for use by the cooking controller 108, and (B) ensure the cooking script 218 is not operative in such a way as to permit the cooking controller 108 to instruct the pressure-cooking appliance 102 to ruin the food item (by burning or undercooking the food item causing food safety issue).

Deleted.

As depicted in FIG. 1B, the cooking controller 108 is operatively connected to a user interface 110. The user interface 110 is useable by the user to program the user-desired cooking operations to be performed by the pressure-cooking appliance 102 (such as, actuating a heater element) in such a way that heat may be applied to the food contained in the cooking appliance, perhaps for a specific duration of time. The user interface 110 may be configured to receive push-button commands from the user of the pressure-cooking appliance 102. The user interface 110 may be configured to display status information associated with the pressure-cooking appliance 102 to the user. In accordance with an option, the user interface 110 is not used (that is, not included or not provided to the user), in which case the cooking controller 108 is controllable by a user-control device 202 (such as, a hand-held device, a smartphone, a cell phone, a tablet computer, a laptop computer, a desktop computer, a computing device, etc.). The user-control device 202 is depicted in FIG. 2. In accordance with another option, the user interface 110 is included (that is, is provided to the user) and the user-control device 202 may be used as well, so that both the user interface 110 and the user-control device 202 (option) may control the cooking controller 108 (if so desired). The user-control device 202 is a device that may be physically detached from or attached to the cooking controller 108. The user interface 110 is a device that may or may not be physically attached or used with the cooking controller 108.

The pressure-cooking appliance 102 of FIG. 1B includes the outer pot 112 that is received by the housing assembly 106. The removable inner cooking pot 114 is configured to be operatively receivable in the interior of the outer pot 112. The removable inner cooking pot 114 is also called an inner cooking pot. The outer pot 112 isolates the removable inner cooking pot 114 from the interior elements or assemblies contained in the housing assembly 106. The removable inner cooking pot 114 receives and contains the food to be cooked by the pressure-cooking appliance 102. The removable inner cooking pot 114 may be removable so that the user may wash and clean the removable inner cooking pot 114 for the next time the pressure-cooking appliance 102 is used to cook food. A lid assembly 116 is pivotally mounted to the housing assembly 106, and is movable between a closed position and an open position. In the closed position, the lid assembly 116 covers the food contained or received in the removable inner cooking pot 114. This is done in such a way that the food contained in the removable inner cooking pot 114 may be cooked (without directly exposing the user to unsafe amounts of heat energy). In the open position, the lid assembly 116 does not cover the food contained or received in the removable inner cooking pot 114. This is done in such a way that the user may have access to the contents received in the removable inner cooking pot 114. A sealing ring (not depicted) is positioned between the removable inner cooking pot 114 and the lid assembly 116 to internally pressurize the removable inner cooking pot 114. A handle assembly 118 extends from the opposite sides of the lid assembly 116, so that the user may grasp the lid assembly 116 and move the lid assembly 116. The lid assembly 116 may be detachable from the housing assembly 106, so that the user may wash and clean the lid assembly 116 when required. A pressure relief valve 120 extends through the lid assembly 116. The pressure relief valve 120 is mounted to the lid assembly 116. The pressure relief valve 120 is configured to release the internal pressure of the removable inner cooking pot 114 in response to manual manipulation from the user, and/or in response to a signal command received from the cooking controller 108.

FIG. 1C depicts a schematic representation of a general example of an apparatus 600 for use with the pressure-cooking appliance 102 of FIGS. 1A and/or 1B.

Hereafter, it will be appreciated that the description identifies and describes options and variations of the apparatus 600, regardless of whether the description identifies the options and/or variations of the apparatus 600 by way of explicit terms and/or non-explicit terms.

The apparatus 600 includes (and is not limited to) a computer processing unit 602 configured to connect to a network connection 604. The computer processing unit 602 (CPU) is also referred to as a central processor unit. The computer processing unit 602 is the hardware within a computer system that carries out the instructions of a computer program (executable code) by performing arithmetical, logical, and input/output operations. Some integrated circuits (ICs) can contain multiple CPUs on a single chip; those ICs are called multi-core processors. The computer processing unit 602 may include multi-core processors if so desired. The network connection 604 is a connection that is configured to provide connectivity between the computer processing unit 602 and a network (such as, the Internet) and/or to another instance of the computer processing unit 602 of another computer system, which may include a hard-wired connection (cabling) and/or a wireless connection (such as, a local area network and/or a personal network, etc.) With the network connection 604, it may be possible to configure settings to reach local and/or remote network resources or functions. The network connection 604 may be called a computer network, a data network or a telecommunications network. The network connection 604 is configured to allow computers to exchange data. In computer networks, networked computing devices (network nodes) pass data to each other along data connections. The connections (network links) between nodes are established using either cable media or wireless media. The best-known computer network is the Internet. Network devices that originate, route and terminate the data are called network nodes. Nodes can include hosts such as, servers and personal computers, as well as networking hardware. Two devices are said to be networked when a device is able to exchange information with another device. The network connection 604 may support applications such as, access to the World Wide Web, shared use of application and storage servers, printers, and fax machines, and use of email and instant messaging applications. This article discusses computer network technologies and classifies them according to the following characteristics: the physical media used to transmit signals, the communications protocols used to organize network traffic, along with the network's size, its topology, and/or its organizational intent.

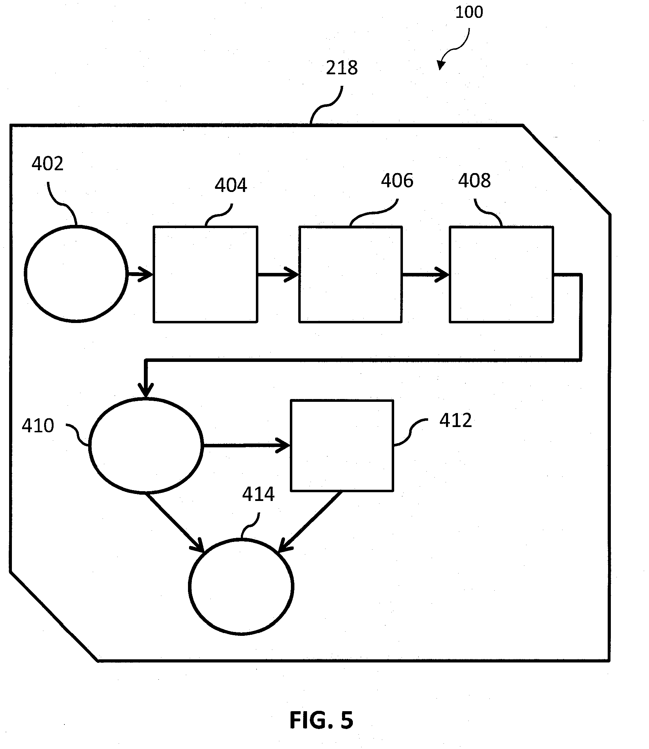

The apparatus 600 also includes a memory unit 606 operatively connected to the computer processing unit 602. The memory unit 606 may include the physical devices used to store programs (executable code and/or sequences of CPU instructions) or data (e.g. program state information, data) on a temporary or permanent basis for use by the CPU of a computer or other digital electronic device. The memory unit 606 may include addressable semiconductor memory, i.e. integrated circuits consisting of silicon-based transistors, used by the CPU of computers and other digital electronic devices. The memory unit 606 may include volatile and/or non-volatile memory. The memory unit 606 includes a non-transitory machine-readable storage medium. The memory unit 606 may also be called a non-transitory memory unit. The memory unit 606 tangibly embodies (stores) a cooking script 218. The cooking script 218 is an example of data. An example of the cooking script 218 is depicted in FIG. 5. The cooking script 218 is configured to direct cooking operations of at least one instance of a cooking controller 108 of at least one instance of a pressure-cooking appliance 102. In accordance with a preferred option, the cooking script 218 is configured to direct cooking operations of many instances of the cooking controller 108 once the users of a respective instance of the pressure-cooking appliance 102 requests access to a copy of the cooking script 218. The cooking controller 108 is operatively connected to the pressure-cooking appliance 102. The cooking controller 108 is configured to control cooking operations of the pressure-cooking appliance 102 based on the cooking script 218. The cooking script 218 provides cooking operation instructions for a type of cooking appliance, and may be machine readable and machine executable by the controller of the type of cooking appliance.

In addition, the memory unit 606 also tangibly embodies (stores) executable code configured to direct the computer processing unit 602 to execute computer processor management of aspects of the cooking script 218. Examples of the computer processor management of aspects of the cooking script 218 include (and are not limited to) creating, modifying, saving, sharing, requesting validation, validating, downloading, and/or uploading the aspects of the cooking script 218.

In addition, the memory unit 606 also tangibly embodies (stores) executable code configured to direct the computer processing unit 602 to convey the cooking script 218 via the network connection 604. It will be appreciated that the term "convey" includes transmitting and/or receiving. The conveyance of the cooking script 218 via the network connection 604 is done in such a way that the cooking script 218 is network conveyed with respect to network-connected instances of the cooking controller 108 associated with respective instances of the pressure-cooking appliance 102 via the network connection 604.

For example, the user of a pressure-cooking appliance 102 may request conveyance of a specific instance of the cooking script 218 (such as, for cooking rice in a particular way), and the cooking script 218 may be conveyed to the pressure-cooking appliance 102 of that particular user. The cooking controller 108 is configured to control cooking operations of the pressure-cooking appliance 102 based on the cooking script 218.

Examples of the computer processing unit 602 may include (and are not limited to) (A) the cooking controller 108 depicted in FIG. 1B, 1C, 2, 3, and 4; (B) a user-control device 202 depicted in FIGS. 2, 3, and 4; (C) a network server 210 depicted in FIGS. 2 and 3; and (D) a validation server 224 depicted in FIG. 2.

Examples of the memory unit 606 may include (and are not limited to) (A) a memory unit 208 depicted in FIGS. 2, 3 and 4, and is associated with the cooking controller 108; (B) a memory unit 204 depicted in FIGS. 2, 3, and 4, and is associated with the user-control device 202; (C) a memory unit 212 depicted in FIGS. 2 and 3, and is associated with the network server 210; and/or (D) a memory unit 226 as depicted in FIG. 2, and is associated with the validation server 224.

Examples of the network connection 604 may include (and are not limited to) (A) a network connection 216 (FIG. 2); (B) a network connection 206 (FIG. 2); (C) a network connection 214 (FIG. 2); (D) a network connection 228 (FIG. 2); and/or (E) a network connection 230 (FIG. 2). Other FIGS. depict other possible network connections that may be used if so desired. The network connection 206, the network connection 214, the network connection 228 and/or the network connection 230 (any other network connection identified in the specification) may include a wired network connection (a physical cable for example) and/or a wireless network connection, and/or a local-area network (such as, a WI-FI (TRADEMARK) network) and/or as a personal-area network (such as, a Bluetooth (TRADEMARK) network), etc.

In accordance with an option, the apparatus 600 includes (and is not limited to) the computer processing unit 602. The computer processing unit 602 is further configured to convey, via the network connection 604, the cooking script 218 with network-connected instances of the cooking controller 108 located at respective remote positions (sites) in such a way that sharing (conveyance) of the cooking script 218 is facilitated by way of the network connection 604.

In accordance with an option, the computer processing unit 602 is further configured to validate the integrity and safety of the cooking script 218.

In accordance with an option, the computer processing unit 602 is further configured to validate the integrity and safety of the cooking script 218 in response to receiving the cooking script 218 from the network connection 604.

In accordance with an option, the computer processing unit 602 is further configured to validate the integrity and safety of the cooking script 218 in response to receiving the cooking script 218 from the network connection 604 by: (A) transmitting, via the network connection 604, a validation request to the validation server 224; and (B) receiving, via the network connection 604, a response to the validation request from the validation server 224.

In accordance with an option, the computer processing unit 602 is further configured to obtain positional information, such as GPS (Global Positioning System) information (position and/or altitude], local weather information (such as barometric pressure), etc.

FIG. ID depicts schematic examples of the options of the apparatus 600 of FIG. 1C. In accordance with an option, the computer processing unit 602 is further configured to operatively communicate with the user-control device 202 (via the network connection 604) so that the user-control device 202 receives the cooking script 218 from the apparatus 600. The user-control device 202 is configured to convey, via the network connection 608, the cooking script 218 with network-connected instances of the cooking controller 108 located at respective remote positions (sites) in such a way that sharing of the cooking script 218 is facilitated by way of the network connection 604.

FIG. 2 depicts schematic representations of specific examples of the apparatus 600 of FIG. 1C for use with the pressure-cooking appliance 102 of FIGS. 1A and/or 1B. In accordance with an option, the cooking controller 108 conveys (transmits and/or receives) the cooking script 218 with remotely positioned instances of the cooking controller 108 (as depicted in FIG. 1C) that are used or owned by other users at remotely-located positions or sites: this arrangement facilitates sharing of cooking scripts via a network (such as, the Internet). The cooking script 218 is used by the cooking controller 108 to cook food received or contained in the pressure-cooking appliance 102 of FIG. 1. A memory unit 208 is connected with (connectable to) the cooking controller 108. The memory unit 208 tangibly embodies (stores) executable code to be executed by the cooking controller 108, so that the cooking controller 108 performs specific tasks and/or functions. Such specific tasks and/or functions relate to the management (handling) of the cooking script 218. A network connection 201 facilitates operative communication between the cooking controller 108 and the user interface 110. The user interface 110 is configured to facilitate user interactions with the cooking controller 108. The user interface 110 may include a set of push buttons or switches, and a set of indicator lamps, a display unit, etc. The cooking controller 108 is configured to execute a program to control operation of the pressure-cooking appliance 102 (FIG. 1A and/or FIG. 1B), such as: (A) heating intensity (e.g. at a relatively higher heat for about ten minutes, then at a medium heat for about twenty minutes, and then at a relatively lower heat for about four hours); (B) internal pressure (e.g. maintain an internal pressure between about 10 to about 11.5 PSI (pounds per square inch); (C) temperature (e.g. maintain internal temperature between about 38 and about 45°C (degrees Centigrade); (D) duration (cooking time); and/or (E) internal moisture level. A temperature above 54°C may be considered as a cooking temperature. A temperature below 54°C may be considered as an incubating temperature. The pressure-cooking appliance 102 (depicted in FIG. 1A and/or 1B) supports cooking temperatures and/or incubating temperatures. As well, the apparatus 600 supports cooking temperatures and/or incubating temperatures as may be required to support the pressure-cooking appliance 102.

The cooking script 218 provides control instructions (cooking control operations) and preferably setting of pressure, moisture, humidity, and/or heating intensity. The cooking script 218 may also include other elements configured to: (A) cause the sound of a bell ring via a speaker (to the user), and (B) to display a reminder notice to the user (auditory and/or visual feedback), etc. The cooking script 218 may include multimedia content (text, audio and/or video). The cooking script 218 may also contain the name of the chef, date, description, URL (uniform resource locator, the address of a World Wide Web page), classification, etc.

The user-control device 202 conveys (transmits and/or receives) the cooking script 218 to remotely positioned instances of the cooking controller 108 (as depicted in FIG. 1C). The user-control device 202 then conveys the cooking script 218 to the cooking controller 108. The user-control device 202 is configured to facilitate preparation (or changing) of a cooking script 218. The user-control device 202 is configured to facilitate management of the cooking script 218 (such as, blogging, e-mailing, network file sharing, etc.). The user-control device 202 is an option for the case where the user interface 110 is not implemented in the pressure-cooking appliance 102 of FIG. 1. The user-control device 202 provides the cooking script 218 to the cooking controller 108, as well as an instruction to execute the cooking script 218. The cooking script 218 is tangibly embodied (stored) in the memory unit 204 of the user-control device 202. The memory unit 204 tangibly embodies (stores) executable code. The user-control device 202 executes the executable code in the memory unit 204 to perform specific tasks and/or functions in the network connection with the cooking script 218. Such specific tasks and/or functions relate to the management of the cooking script 218.

The network connection 214 connects the user-control device 202 to the network server 210. For the case (option) where the user interface 110 of FIG. 1 is not implemented in the pressure-cooking appliance 102 of FIG. 1, the user-control device 202 is implemented (used) as a way to interface the user to the cooking controller 108, thus eliminating the user interface 110 if so desired. Of course, both the user interface 110 and the user-control device 202 may be implemented or used at the same time if so desired.

The user-control device 202 is configured to communicate with the cooking controller 108. The user-control device 202 is configured to convey (transmit and/or receive), via a network connection 214, the cooking script 218 with network-connected instances of the cooking controller 108 (depicted in FIG. 1C) that are located at respective remote positions (sites); this is done in such a way that sharing of the cooking script 218 is facilitated by way of the network connection 214.

One problem is that many cooking recipes may provide an inaccurate description of the steps for cooking food. For instance, for the case where a cooking recipe provides instructions for cooking meat at high pressure for 35 minutes may accidentally over cook the lean meat portion and make it tough to eat once cooked. The correct way may be to cook the meat for 15 minutes at a higher pressure, followed by 25 minutes at medium or lower pressure (for a better result). For this case, the cooking controller 108 is configured to allow the user to program the operational steps in the cooking script 218. Then, the user may share the cooking script 218 with other users via the Internet, so that the other users may know how to cook the meat properly, and to execute the same cooking script to reproduce the same result for themselves. For example, supposing that a fast-food franchise restaurant company has a chef located at their head office. The chef identifies a cooking script 218 to be deployed to various instances of the pressure-cooking appliance 102 positioned in various fast-food restaurant. The chef may provide the cooking script 218 via a network connection to the instances of the pressure-cooking appliance 102 thereby updating the pressure-cooking appliance 102. Other users may find the cooking script 218 on the Internet that pertains to the type of foods they wish to cook in the pressure-cooking appliance 102 (FIGS. 1A and IB). The user can then issue a command request so that the cooking script 218 is conveyed to the cooking controller 108. In this manner the user may reproduce the same cooking result on their instance of the cooking appliance. In this manner, the cooking script 218 is shared via a network connection.

The cooking script 218 is tangibly embodied (stored) in the memory unit 208 of the cooking controller 108. If required, the cooking script 218 is tangibly embodied (stored) in a memory unit of the user-control device 202. Examples of the user-control device 202 may include (are not limited to) a cell phone, a smartphone, a tablet device, a laptop device, a computer device, etc.

In accordance with an option, the cooking controller 108 receives the cooking script 218 from the user-control device 202, and/or from the network server 210.

For the case where the user-control device 202 is not used, the user interface 110 includes push buttons and a display unit (for example, just in case the smartphone, or other device, is not working or cannot be used).

Referring to FIG. 2, a network connection 216 connects the cooking controller 108 to the network server 210. The network connection 216 may include a wired network connection and/or a wireless network connection, such as a local-area network (such as, a WI-FI (TRADEMARK) network), a personal-area network (such as, a Bluetooth (TRADEMARK) network, etc.). The network connection 216 is an option for the case where the user interface 110 is implemented, and where the user-control device 202 is not implemented.

A network connection 206 connects the cooking controller 108 to the user-control device 202. The network connection 206 may include a wired network connection and/or a wireless network connection (such as, a WI-FI network connection, a Bluetooth network connection, etc.). The network connection 206 is an option for the case where the user interface 110 is not implemented, and where the user-control device 202 is implemented.

Another option includes the usage of both the user interface 110 and the user-control device 202 if so desired, in which case the network connection 206 and the network connection 201 are used, while the network connection 216 may remain optional if so desired (for instances as a backup option in case the network connection 206 or the user-control device 202 no longer function). It will be appreciated that some network connections are options depending on which network connections are actually implemented and/or used.

The following description is equally applicable to both the user-control device 202 and to the cooking controller 108. The user-control device 202 and the cooking controller 108 may be configured to program the cooking script 218 (by way of executable code stored in the memory unit 208 or the memory unit 204). The executable code (program) may provide or facilitate drag and drop operations in a linear progression, etc. The cooking script 218 may include a sequence of operations, with an extension as part of the file name, such as ".cooker", etc.). The cooking script 218 may be emailed or uploaded and shared on the Internet (or other network).

The following description is equally applicable to both the user-control device 202 and to the cooking controller 108: the executable code used with these devices is configured to facilitate the ability to change the contents of the cooking script 218. Each step and operation in the cooking script 218 may be independently managed. While the cooking script 218 is being executed by the cooking controller 108, each operation step and/or operational parameters may be changed on the fly. The operation step may be suspended, re-run, and/or the operational parameters (time, temperature, pressure and heating intensity) may be changed.

The following description is equally applicable to both the user-control device 202 and to the cooking controller 108: the executable code used with these devices is configured to control the operational cooking state of the pressure-cooking appliance 102 (FIGS. 1A and/or 1B). Such operational cooking states may include: (A) the OFF state; (B) the soaking state: (optional) maintain food materials at a low temperature to soften the materials; (C) the cooking state: bring the food materials to a certain temperature and pressure level; (D) the keep-warm state: hold the cooked food at a certain temperature to be ready to serve at any time; and/or (E) the reminder state: reminding the user that the food remains in the cooker (by way of the user display, by e-mail, etc.).

The network server 210 is accessible via a network connection 214 and/or via a network connection 216. Examples of the network server 210 include (and are not limited to) a Facebook (TRADEMARK) web server, a Google (TRADEMARK) docs web server, a web-hosting server, and/or a web server. A memory unit 212 is connected with the network server 210. The memory unit 212 tangibly embodies (stores) executable code to be executed by the network server 210 to perform specific tasks and/or functions in the network connection with the cooking script 218. Such specific tasks and/or functions relate to the management of the cooking script 218.

A network connection 228 connects the network server 210 to the validation server 224. The network connection 228 may include a wired network connection and/or a wireless network connection (such as, a WI-FI network connection, a Bluetooth network connection, etc.).

The validation server 224 includes executable codes stored in the memory unit 226, and the executable code is configured to validate each instance of the cooking script 218 to be used by the cooking controller 108. Generally, the validation server 224 is configured to validate the cooking script 218 before the cooking script 218 is used by the cooking controller 108.

For instance, copied instances of the cooking script 218 may contain errors and/or a malicious amendment to the cooking script 218 (in order to facilitate a malicious attack on the pressure-cooking appliance 102). A third party may developed a cooking script 218 that may contain an error or a malicious attack (that may cause the pressure-cooking appliance 102 to malfunction or become hazardous, or ruin the food item). In order to circumvent this possibility, the validation server 224 is configured to validate the integrity and safety of the cooking script 218. Validation of the cooking script 218 may happen after the cooking script 218 is downloaded to the validation server 224. The entity that operates the validation server 224 may be the manufacturer of the pressure-cooking appliance 102 and/or may be an independent third party (if so desired).

The validation server 224 is configured to: (A) receive a script validation request and a cooking script 218 (or a cooking script identifier) from the user-control device 202 or from the cooking controller 108; (B) check the validity of the cooking script 218; and/or (C) transmit the result of the validity check of the cooking script 218 to the user-control device 202 and/or to the cooking controller 108 via the network connection 228 and/or the network connection 230. Generally speaking, the validation server 224 is configured to facilitate validation of instances of a cooking script 218 via a network connection, and the cooking script 218 is received from network-connected instances of a pressure-cooking appliance 102 located at respective remote positions. The validation server 224 may be further configured to: (A) validate the integrity and safety of the cooking script 218 in response to receiving the cooking script 218 (or identifier associated with the cooking script 218) via the network connection by: (a) receiving, via the network connection, a validation request from at least one of the network-connected instances of the pressure-cooking appliance 102; (b) validating the validation request; and (c) transmitting, via the network connection, a validation response to the network-connected instances of the pressure-cooking appliance 102. The validation server 224 may be further configured to operatively communicate with a user-control device 202, and the user-control device 202 is configured to operatively communicate with the pressure-cooking appliance 102.

The validation server 224 is configured to allow validation of instances of the cooking script 218, based on the strings of the cooking script 218. The cooking script 218 can have the following states: (A) validated and safe (safe to use), and can be sent to the cooking controller 108; (B) validated and unsafe (the script is known to be unsafe to use), and cannot be sent to the cooking controller 108; (C) validated and unknown (unknown script), to be verified at another time (can be sent with caution); and/or (D) not validated (on account of lack of a suitable network connection), and the user acknowledges full responsible for the use of this instance of the cooking script 218.

The validation server 224 may be configured to check the safety of the cooking script 218 based on the specification of a particular pressure-cooking appliance 102 before sending the cooking script 218 to the cooking controller 108.

The memory unit 226 is connected with the validation server 224. The memory unit 226 tangibly stores executable code for directing the validation server 224 to perform or to execute functions (such as, management of the cooking script 218).

The network connection 228 connects the validation server 224 to the user-control device 202. The network connection 228 may include a wired network connection and/or a wireless network connection (such as, a WI-FI network connection, a Bluetooth network connection, etc.).

The network connection 230 connects the validation server 224 to the cooking controller 108. The network connection 230 may include a wired network connection and/or a wireless network connection (such as, a WI-FI connection, a Bluetooth connection, etc.).

FIG. 3 depicts a schematic representation of an example of the apparatus 600 of FIG. 1C having an example of a cooking controller 108 for use with the pressure-cooking appliance 102 of FIGS. 1A and/or 1B. The cooking controller 108 of FIG. 3 includes a safety controller 316 and a recipe controller 320. This implementation is a multi-control circuit. The safety controller 316 may be called a micro controller unit (MCU). The recipe controller 320 may be called a program execution unit (PEU). For instance, the recipe controller 320 may operate in an out-of-control fashion when executing the cooking script 218 (for whatever reason). This case may compromise the safety of the pressure-cooking appliance 102 causing various unwanted hazards. Therefore, separating the cooking controller 108 into the recipe controller 320 and the safety controller 316 solves this particular problem. The control circuitry of FIG. 3 is configured to split the cooking controller 108 to handle the potential problem of programming faults in the cooking script 218.

The memory unit 208 includes a combination of the memory unit 318 (used by the safety controller 316) and the memory unit 322 (used by the recipe controller 320). The memory unit 318 tangibly stores executable code for execution by the safety controller 316. The memory unit 322 tangibly embodies (stores) executable code to be executed by the recipe controller 320.

The pressure-cooking appliance 102 has a set of cooking elements 301 including: a heating assembly 302 (also called a heating element), a thermal sensor 304 (thermocouple), a pressure sensor 306, a lid lock switch 308, a power switch 310, a power sensor 312, and/or a heat control element 314 (TRIAC-based devices, power transistors). TRIAC stands for Triode for Alternating Current. TRIAC is a tradename for an electronic component that can conduct current in either direction when it is triggered (turned on), and is also called a bidirectional triode thyristor or bilateral triode thyristor.

The safety controller 316 is configured to maintain a basic level of safety for the pressure-cooking appliance 102. The safety controller 316 is configured to refuse cooking instructions to heat up for the case where the on-cooker sensors indicate that it is not safe to execute such a cooking instruction.

The recipe controller 320 may get into an unknown state due to a programming error, a cooking script error, and/or a network communication error. The safety controller 316 monitors the recipe controller 320 and resets the recipe controller 320 if expected responses are not received from the recipe controller 320. The recipe controller 320 may communicate with the user-control device 202, and may execute the cooking script 218 by sending instructions to the safety controller 316.

The safety controller 316 is operatively connected to the recipe controller 320 via a network connection 324. The safety controller 316 is operatively connected to the set of cooking elements 301 of the pressure-cooking appliance 102. The safety controller 316 is configured to receive the cooking instructions from the recipe controller 320 in such a way as to control the cooking operation of the pressure-cooking appliance 102. The safety controller 316 may be configured to receive the cooking instructions from the recipe controller 320 in such a way as to control the cooking operation of the pressure-cooking appliance 102. The safety controller 316 may be further configured to override the cooking instructions received from the recipe controller 320 in such a way as to prevent unsafe operation of the pressure-cooking appliance 102 while continuing operation of the pressure-cooking appliance 102 in a safe manner. The safety controller 316 may be further configured to stop operation of the pressure-cooking appliance 102 in response to determining that the cooking instructions received from the recipe controller 320 may cause unsafe operation of the pressure-cooking appliance 102. The safety controller 316 may be further configured to monitor the operation of the recipe controller 320, and to reset the operation of the recipe controller 320 for the case where an expected response was not received from the recipe controller 320.

The safety controller 316 connects to each of the on-cooker sensors. The safety controller 316 is configured to control the heating assembly 302. The safety controller 316 receives instructions from the recipe controller 320, and the safety controller 316 is configured to turn on and/or off the heating assembly 302 based on the sensor readings. The safety controller 316 is configured to send the readings and the cooker states to the recipe controller 320 (if so desired). The safety controller 316 may be configured to relay the cooker states and sensor readings to the user-control device 202. The safety controller 316 is configured to: (A) gather (receive) sensor readings (temperature, pressure, moisture, and/or humidity); and (B) control the heating assembly 302 with time and heating intensity.

A network connection 324 facilitates communication between the safety controller 316 and the recipe controller 320.

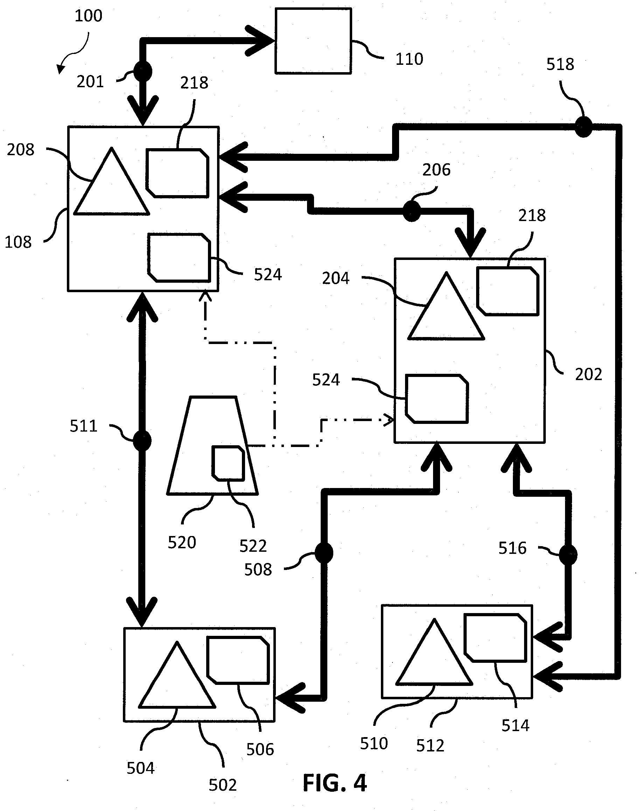

FIG. 4 depicts a schematic representation of an example of the apparatus 600 of FIG. 1C for use with the pressure-cooking appliance 102 of FIGS. 1A and/or 1B. The cooking script 218 provides operational cooking instructions. The operational cooking instructions are configured to permit on the fly adjustment to the cooking operations (that is, adjustments to cooking parameters on the fly or in situ). For instance, a problem may occur when the same instance of the cooking script 218 is used at different elevations, for example, in Florida (a place that is close to sea level) and in Denver (a place that is 5,280 feet or 1,609 meters above sea level). The problem is that the same cooking recipe may require different cooking parameters based on the location of the cooking appliance. What may be needed is a different cooking time and/or a cooking pressure for the cooking appliance (that used the same cooking script 218) that is located in Florida in comparison to the cooking appliance located in Denver. In addition, a high-pressure weather system (having a relatively higher barometric pressure) and a low-pressure weather system (having a relatively lower barometric pressure) may change the atmospheric pressure as much as 1000 meters of altitude. Again, the cooking time may be different and therefore the timing parameters in the cooking script 218 should be adjusted accordingly to account for the change in altitude, barometric pressure, etc. In general, cooking time may need to be increased by about one minute to about two minutes for about every 1000 feet of elevation; this time difference is significant (from about 25% to about 50% difference). Alternatively, the cooking pressure may be adjusted to compensate for the change in the atmospheric pressure.

The executable code of the cooking controller 108 (and/or of the user-control device 202) is configured to: (A) request and receive the location including altitude and the local weather conditions; and (B) use the data received to change the cooking time and/or the cooking pressure of the cooking script 218 on the fly without further input from the user. The executable code may display the estimated time of arrival for when the food may be ready for removal from the pressure-cooking appliance 102. Users do not need to be concerned about the altitude in which the pressure-cooking appliance 102 operates. The executable code communicates with a GPS (Global Positioning System) device (that may be provided by the user-control device 202 and/or by the position server 512) and preferably a barometric sensor, and may receive the weather information along with the weather news, and adjust the cooking parameters in the cooking script 218 in response to this information. The executable code is configured to modify the cooking script 218 on the fly by way of additional information based on position information 514 and/or the weather information 506.

When the user wants to execute the cooking script 218, the user may press the "Start" button. The "Start" button may be positioned on (provided by) the user-control device 202 (and/or by the user interface 110). Once the Start button is depressed by the user, the cooking script 218 is configured to execute the following tasks: (A) request the position information 514 including altitude information provided by the GPS from the position server 512; (B) request the local weather news (via the Internet) for weather information 506 from the weather server 502; (C) receive the position information 514 and the weather information 506 from the weather server 502; (D) receive (as an option) an attribute 522 associated with at least one or more food items to be cooked (such as, the weight of the food items). This information may be provided by a food-attribute equipment 520 (such as, a weight scale); (E) adjust the cooking parameters in the cooking script 218 in accordance with the information 524 (that is, the information received from the various servers and preferably a food-attribute equipment 520 (such as, the scale for example); (F) send the adjusted instance of the cooking script 218 to the cooking controller 108, along with a request to execute the adjusted instance of the cooking script 218; (G) display the progress of the cooking script 218 while allowing for a pause-resume command, a stop-restart command, and/or a repeat-at-any-step command; and/or (H) display a reminding message (to the user) when the cooking of the food item is complete.

The cooking pressure in the pressure-cooking appliance 102 includes a combination of the pressure inside the pressure-cooking appliance 102 and the ambient environmental pressure outside of the pressure-cooking appliance 102. Adjustment to the cooking time may be based on the barometric pressure calculated with the altitude information obtained from the GPS by the user-control device 202, or by the cooking controller 108, and/or with the weather information obtained from the Internet. Water will boil at two different temperatures at the same elevation for the case where the pressure-cooking appliance 102 is positioned in a high-pressure weather system instead of a low-pressure weather system. The algorithms are known and not described here. Cooking pressure may also be adjusted to compensate for changes in the environmental pressure. In this way, the cooking time does not need to be prolonged.

The executable code may be configured to: (A) gather networked information (position or location information and/or altitude information, and/or weather condition) via a network connection; (B) transmit a request for the networked information to a user-control device 202 and/or the cooking controller 108; and (C) change operation of the cooking script 218 (such as, time, heat, pressure, etc.) based on the networked information.

The weather server 502 includes a memory unit 504 configured to store the weather information 506 (barometric pressure, ambient outdoor temperature). A network connection 508 may connect the weather server 502 to the user-control device 202. A network connection 511 may connect the weather server 502 to the cooking controller 108.

A position server 512 includes a memory unit 510 configured to store the position information 514, which may include GPS information. The GPS information may be provided by the user-control device 202 or by the position server 512. Alternatively, the position may be indicated by the location identifier (ID) provided by the user-control device 202. An example of the location identifier is the MAC (media access control) address provided by a WI-FI hotspot (also called a network node). A network connection 516 connects the position server 512 to the user-control device 202. A network connection 518 connects the position server 512 to the cooking controller 108.

The food-attribute equipment 520 (such as, a weight scale) is configured to provide the attribute 522 (such as, weight information). The food-attribute equipment 520 may be connectable to the user-control device 202 and/or to the cooking controller 108. The food-attribute equipment 520 may be stand alone, in which case the weight information is manually entered into the user-control device 202 and/or the cooking controller 108. The attribute 522 is an indication of the weight of the food item to be cooked in the pressure-cooking appliance 102 of FIG. 1A or FIG. 1B.

The information 524 is stored in the memory unit 204 and/or the memory unit 208, and may include any combination and/or permutation of the weather information 506, the position information 514, and/or the attribute 522.

FIG. 5 depicts a schematic representation of a cooking script 218 to be used by the apparatus 600 of FIG. 1C, and the examples of the apparatus 600 of FIGS. 2, 3 and 4. FIG. 5 depicts an example of the cooking script 218.

The cooking script 218 is a sequence of instructions that define a cooking process. The cooking script 218 includes controller-executable code (processor-executable instructions) to be executed by the cooking controller 108 of the pressure-cooking appliance 102. The cooking process identified (provided) in the cooking script 218 is to be executed by the cooking controller 108 of the pressure-cooking appliance 102; this is done in such a way that the cooking operation of the pressure-cooking appliance 102 is controlled in accordance with the sequence of instructions provided by the cooking script 218. The cooking process (steps) of the cooking script 218 is executed by the cooking controller 108 in such a way that a specific cooking result is achieved by the pressure-cooking appliance 102.

The chef or recipe author writes the executable code of the cooking controller 108 (of FIG. 2) on (using) the user-control device 202 (of FIG. 2). The user-control device 202 is configured to: (A) create the cooking script 218; and (B) submit the cooking script 218 to the validation server 224 (depicted in FIG. 2); (C) post the cooking script 218 (via the Internet) to the network server 210 (of FIG. 2). To avoid a flood of submissions of many instances of the cooking script 218, the submission may include an execution result indicator from the cooking controller 108. This arrangement may help to weed out (to remove) users simply making a change (that makes no sense or that may be even dangerous) to the cooking script 218, and then submitting the cooking script 218 to the validation server 224 (depicted in FIG. 2).

The cooking script 218 of FIG. 5 depicts a recipe script for cooking brown rice. The user adds a measured amount of brown rice to the removable inner cooking pot 114 of FIG. 1B. The user removes any stray grains from the top edge of the removable inner cooking pot 114. The user adds water to the removable inner cooking pot 114 at a 1:1.25 ratio (1.25 cups of water for each cup of rice). The user presses the "Start" button (either positioned on the user interface 110 and/or on the user-control device 202) to start the cooking script 218.

The field 402 provides the start indication for the pressure-cooking appliance 102 (FIG 1A and/or FIG. 1B).

Field 404 provides an indication of the soaking cycle for the pressure-cooking appliance 102, in which the cooking temperature is set for 50°C (degrees Centigrade), the internal pressure is set for none (no pressure), the cooking time is set for 30 minutes, the heating profile is set for gradual, and the humidity setting is set for none (no adjustment).

The field 406 provides an indication of the pressure cooking cycle for the pressure-cooking appliance 102, in which the cooking temperature is set for 118°C (degrees Centigrade), the internal cooking pressure is set for low, the cooking time is set for 22 minutes, the heating profile is set for moderate, and the humidity setting is set for none.

The field 408 provides an indication of the depressurizing cycle for the pressure-cooking appliance 102, in which the cooking temperature is set for 80°C (degrees Centigrade), the internal cooking pressure is set for none, the cooking time is set for 10 minutes, the heating profile is set for low, and the humidity setting is set for none.

The field 410 provides an indication of the ready-to-serve indicator to be displayed to the user, in which the user has the option to remove the cooked food item from the pressure-cooking appliance 102.

The field 412 provides an indication of the keep-warm cycle for the pressure-cooking appliance 102 (as an option for the user), in which the cooking temperature is set for 65°C (degrees Centigrade), the internal cooking pressure is set for none, the cooking time is set for 10 hours, the heating profile is set for low, and the humidity setting is set for none.

The field 414 provides an indication to stop the cooking operation of the cooking controller 108.

It is understood that the scope of the present invention is limited to the scope provided by the appended claims. It is understood, for the purposes of this document, that the phrase "includes" is equivalent to the word "comprising".

## Claims

1. An apparatus for cooking a food item, the apparatus (100) comprising:
a pressure-cooking appliance (102), including:
a housing assembly (106);
a heating assembly (302) being operatively positioned in the housing assembly (106);
an outer pot (112) being operatively received by the housing assembly (106), and the outer pot (112) being positioned adjacent to the heating assembly (302);
a removable inner cooking pot (114) defining an interior, the removable inner cooking pot (114) being selectively removable from and insertable to the outer pot (112) of the housing assembly (106), the outer pot (112) being positioned, at least in part, between and separating, at least in part, the removable inner cooking pot (114) from the heating assembly (302) once the removable inner cooking pot (114) is inserted into the outer pot (112);
a lid assembly (116) being configured to be operatively connectable to the housing assembly (106), and the lid assembly (116) being configured to selectively operatively securely close and seal the interior of the removable inner cooking pot (114) once the food item is operatively received in the interior of the removable inner cooking pot (114) so that the removable inner cooking pot (114) may be internally pressurized;
a sensor assembly being operatively positioned relative to the housing assembly (106), and the sensor assembly being configured to monitor a sensed attribute regarding an attribute of the interior of the removable inner cooking pot (114) being operatively received by the outer pot (112);
a cooking controller (108) being operatively positioned relative to the housing assembly (106), the cooking controller (108) being operatively connected to the heating assembly (302) and to the sensor assembly, and the cooking controller (108) being configured to control the heating assembly (302) in accordance with a heating duration, a heating intensity and the sensed attribute provided by the sensor assembly, and the cooking controller (108) being configured to comprise, or to operatively connect to, a computer processing unit (602) in such a way that the cooking controller (108) receives a cooking script (218) from the computer processing unit (602), and the cooking script (218) having a set of controller-executable instructions being configured to direct the cooking controller (108) to pressure cook the food item being received in the removable inner cooking pot (114) in accordance with the set of controller-executable instructions; and
a memory unit (208) being operatively positioned relative to the cooking controller (108), the memory unit (208) being comprised in, or operatively connected to, the cooking controller (108), and the memory unit (208) being configured to tangibly store the cooking script (218), the cooking script (218) having the set of controller-executable instructions being configured to direct the cooking controller (108) to pressure cook the food item being received in the removable inner cooking pot (114) in accordance with the set of controller-executable instructions; and **characterised in that** the pressure-cooking appliance (102) further includes:
a user-control device (202) being configured to (A) communicate with the cooking controller (108), (B) facilitate ability to program and change the contents of the cooking script (218), and (C) upload the cooking script (218) via a network in such a way that the cooking script (218) is shared via the network; and
wherein:
the cooking script (218) is further configured to be prepared by users; and
the cooking script (218) is further configured to be network shared with other users having their own instance of the pressure-cooking appliance (102); and
any one of the executable code of the cooking controller (108) or the user-control device (202) is configured to:
(A) request and receive, via a network connection, one or more of: i) position information (514), including altitude information, from a position server (512); and ii) local weather information (506) from a weather server (502); and
(B) use the altitude and/or the local weather information that was received to change any one of a cooking time, a cooking pressure, and a combination of the cooking pressure and the cooking time of the cooking script (218) on the fly without further input from the user.

2. The apparatus of claim 1, wherein:
the cooking controller (108) is further configured to:
wirelessly receive the cooking script (218) transmitted from the computer processing unit (602); and
store the cooking script (218) that was wirelessly received from the computer processing unit (602) to the memory unit (208).

3. The apparatus of claim 1, wherein:
the cooking script (218) is further configured to direct the cooking controller (108) to cook the food item based on sensor readings provided by the sensor in accordance with the set of controller-executable instructions contained in the cooking script (218).

4. The apparatus of claim 1, wherein:
the cooking script (218) is further configured to be adjustable based on condition of the food item.

5. The apparatus of claim 1, wherein:
the cooking script (218) is further configured to control operation of the cooking controller (108) in such a way as to adapt any one of an operating time and the heating intensity of the pressure-cooking appliance (102) in response to the cooking controller (108) receiving a sensor reading from the sensor, and the sensor reading includes any one or more of a temperature reading, a pressure reading, and/or a humidity reading.

6. The apparatus of claim 1, wherein :
the cooking script (218) is further configured to adjust any one of a cooking pressure, a cooking time, and a combination of the cooking pressure and the cooking time of the removable inner cooking pot (114) by taking into account the pressure inside the removable inner cooking pot (114) and the environment pressure surrounding an exterior of the pressure-cooking appliance (102).

7. The apparatus of claim 1, wherein:
the cooking controller (108) is further configured to receive additional cooking procedures to be uploaded to the computer processing unit (602) and to be executed by another instance of the pressure-cooking appliance (102).

8. The apparatus of claim 1, wherein:
the cooking controller (108) includes:
a recipe controller (320); and
a safety controller (316); and
the recipe controller (320) being configured to:
receive the cooking script (218) having cooking instructions;
execute the cooking script (218); and
instruct the safety controller (316) to cook the food item received in the interior of the removable inner cooking pot (114) in such a way that the safety controller (316) carries out a cooking operation on the food item; and
the safety controller (316) being configured to:
receive the cooking instructions from the recipe controller (320);
execute the cooking instructions received from the recipe controller (320) in such a way that the food item received in the removable inner cooking pot (114) is cooked in accordance with the cooking instructions;
maintain a level of safety for the pressure-cooking appliance (102);
monitor operation of the recipe controller (320); and
reset the recipe controller (320) once expected responses are not provided by and received from the recipe controller (320).

9. The apparatus of claim 1, wherein:
the cooking script (218) is further configured to be validated by a cooking-script validation service.

10. The apparatus of claim 1, wherein:
the cooking script (218) is further configured to be validated by a cooking-script validation service, and the cooking-script validation service is configured to:
ensure the cooking script (218) is safe for use by the cooking controller (108); and
ensure the cooking script (218) is not operative in such a way as to permit the cooking controller (108) to instruct the pressure-cooking appliance (102) to ruin the food item.

11. The apparatus of claim 1, wherein:
the sensor assembly includes a combination of a thermal sensor (304) and a pressure sensor (306) and a humidity sensor (307).

12. The apparatus of claim 1, wherein:
the user-control device (202) is further configured to:
receive an attribute associated with at least one or more food items to be cooked; and
adjust the cooking parameters in the cooking script (218) in accordance with the attribute.

13. A method of operating an apparatus (100) for cooking a food item, the apparatus (100) includes a pressure-cooking appliance (102), including: (A) a housing assembly (106); (B) a heating assembly (302) being operatively positioned in the housing assembly (106); (C) an outer pot (112) being operatively received by the housing assembly (106), and the outer pot (112) being positioned adjacent to the heating assembly (302); (D) a removable inner cooking pot (114) defining an interior, the removable inner cooking pot (114) being selectively removable from and insertable to the outer pot (112) of the housing assembly (106) in such a way that the outer pot (112) separates, at least in part, the removable inner cooking pot (114) from the heating assembly (302), (E) a lid assembly (116) being operatively connected to the housing assembly (106), and the lid assembly (116) being configured to selectively operatively securely close and seal the interior of the removable inner cooking pot (114) once the food item is operatively received in the interior of the removable inner cooking pot (114) so that the removable inner cooking pot (114) may be internally pressurized; (F) a sensor assembly being operatively positioned relative to the housing assembly (106), and the sensor assembly being configured to monitor a sensed attribute regarding an attribute of the interior of the removable inner cooking pot (114) being operatively received by the outer pot (112); (G) a cooking controller (108) being operatively positioned relative to the housing assembly (106), the cooking controller (108) being operatively connected to the heating assembly (302) and to the sensor assembly, and the cooking controller (108) being configured to control the heating assembly (302) in accordance with a heating duration, a heating intensity and the sensed attribute provided by the sensor assembly, and the cooking controller (108) being configured to comprise, or to operatively connect to, a computer processing unit (602); and (H) a memory unit (208) being operatively positioned relative to the housing assembly (106), the memory unit (208) being comprised in, or operatively connected to, the cooking controller (108), and the memory unit (208) being configured to tangibly store a cooking script (218), the cooking script (218) having a set of controller-executable instructions being configured to direct the cooking controller (108) to pressure cook the food item being received in the removable inner cooking pot (114) in accordance with the set of controller-executable instructions, and the method comprising:
operatively connecting the cooking controller (108) to the computer processing unit (602) in such a way that the cooking controller (108) receives the cooking script (218) from the computer processing unit (602), and the cooking script (218) having the set of controller-executable instructions being configured to direct the cooking controller (108) to pressure cook the food item being received in the removable inner cooking pot (114) in accordance with the set of controller-executable instructions; and
**characterised in that** the method further comprises:
executing the cooking script (218) having the set of controller-executable instructions in such a way that the cooking controller (108) is directed to pressure cook the food item being received in the removable inner cooking pot (114) in accordance with the set of controller-executable instructions; and
communicating with the cooking controller (108) via a user-control device (202), and the user-control device (202) being configured to (a) facilitate ability to program and change the contents of the cooking script (218), and (b) upload the cooking script (218) via a network in such a way that the cooking script (218) is shared via the network; and
receiving the cooking script (218) that is prepared by users; and
sharing the cooking script (218), via the network, with other users having their own instance of the pressure-cooking appliance (102); and
requesting and receiving, via a network connection, one or more of i) position information (514), including altitude information, from a position server (512) and local weather information (506) from a weather server (502); and
using the altitude and/or the local weather information that was received to change any one of a cooking time, a cooking pressure, or a combination of the cooking pressure and the cooking time of the cooking script (218) on the fly without further input from the user.

## Patentansprüche

1. Vorrichtung zum Kochen eines Nahrungsmittels, wobei die Vorrichtung (100) Folgendes umfasst:
ein Druckkochgerät (102), einschließlich:
einer Gehäusebaugruppe (106);
einer Heizbaugruppe (302), die wirksam in der Gehäusebaugruppe (106) positioniert ist;
eines äußeren Topfs (112), der wirksam in der Gehäusebaugruppe (106) aufgenommen ist, wobei der äußere Topf (112) angrenzend an die Heizbaugruppe (302) positioniert ist;
eines herausnehmbaren inneren Kochtopfs (114), der einen Innenraum definiert, wobei der herausnehmbare innere Kochtopf (114) wahlweise aus dem äußeren Topf (112) der Gehäusebaugruppe (106) herausnehmbar und in diesen einsetzbar ist, wobei der äußere Topf (112) zumindest teilweise zwischen dem herausnehmbaren inneren Kochtopf (114) und der Heizbaugruppe (302) angeordnet ist und diesen zumindest teilweise von selbiger trennt, sobald der herausnehmbare innere Kochtopf (114) in den äußeren Topf (112) eingesetzt ist;
einer Deckelbaugruppe (116), die so ausgelegt ist, dass sie wirksam mit der Gehäusebaugruppe (106) verbunden werden kann, wobei die Deckelbaugruppe (116) so ausgelegt ist, dass sie das Innere des herausnehmbaren inneren Kochtopfs (114) wahlweise wirksam sicher verschließt und abdichtet, sobald das Nahrungsmittel im Inneren des herausnehmbaren inneren Kochtopfs (114) wirksam aufgenommen ist, so dass der herausnehmbare innere Kochtopf (114) innen unter Druck gesetzt werden kann;
einer Sensorbaugruppe, die im Verhältnis zur Gehäusebaugruppe (106) wirksam positioniert ist, wobei die Sensorbaugruppe so ausgelegt ist, dass sie ein erfasstes Attribut in Bezug auf eine Eigenschaft des Inneren des herausnehmbaren inneren Kochtopfs (114) überwacht, der im äußeren Topf (112) wirksam aufgenommen wird;
einer Kochsteuerung (108), die im Verhältnis zur Gehäusebaugruppe (106) wirksam positioniert ist, wobei die Kochsteuerung (108) mit der Heizbaugruppe (302) und der Sensorbaugruppe wirksam verbunden ist und die Kochsteuerung (108) so ausgelegt ist, dass sie die Heizbaugruppe (302) gemäß einer Heizdauer, einer Heizintensität und des erfassten Attributs, das von der Sensorbaugruppe bereitgestellt wird, steuert, wobei die Kochsteuerung (108) so ausgelegt ist, dass sie eine Computerverarbeitungseinheit (602) umfasst oder mit einer solchen wirksam verbunden ist, so dass die Kochsteuerung (108) ein Kochskript (218) von der Computerverarbeitungseinheit (602) empfängt, wobei das Kochskript (218) einen Satz der von der Steuerung ausführbaren Befehle aufweist, die so ausgelegt sind, dass sie die Kochsteuerung (108) anweisen, das im herausnehmbaren inneren Kochtopf (114) aufgenommene Nahrungsmittel gemäß dem Satz der von der Steuerung ausführbaren Befehle unter Druck zu kochen; und
einer Speichereinheit (208), die im Verhältnis zur Kochsteuerung (108) wirksam positioniert ist, wobei die Speichereinheit (208) Teil der Kochsteuerung (108) oder mit dieser wirksam verbunden ist, und die Speichereinheit (208) so ausgelegt ist, dass sie das Kochskript (218) konkret speichert, wobei das Kochskript (218) den Satz der von der Steuerung ausführbaren Befehle enthält, die so ausgelegt sind, dass sie die Kochsteuerung (108) anweisen, das im herausnehmbaren inneren Kochtopf (114) aufgenommene Nahrungsmittel gemäß dem Satz der von der Steuerung ausführbaren Befehle unter Druck zu kochen; und **dadurch gekennzeichnet, dass** das Druckkochgerät (102) ferner Folgendes umfasst:
eine Benutzersteuervorrichtung (202), die so ausgelegt ist, dass sie (A) mit der Kochsteuerung (108) kommuniziert, (B) die Möglichkeit zum Programmieren und Ändern des Inhalts des Kochskripts (218) ermöglicht und (C) das Kochskript (218) über ein Netzwerk so hochlädt, dass das Kochskript (218) über das Netzwerk gemeinsam genutzt wird; und
wobei gilt:
Das Kochskript (218) ist ferner so ausgelegt, das es von Benutzern vorbereitet wird; und
das Kochskript (218) ist ferner so ausgelegt, dass es mit anderen Benutzern, die ihr eigenes Exemplar des Druckkochgeräts (102) besitzen, über das Netzwerk gemeinsam genutzt werden kann; und
einer der ausführbaren Codes der Kochsteuerung (108) oder der Benutzersteuervorrichtung (202) ist derart ausgelegt, dass
(A) über eine Netzwerkverbindung eine oder mehrere der folgenden Informationen angefordert und empfangen werden: i) Positionsinformationen (514), einschließlich Höheninformationen, von einem Positionsserver (512); und ii) örtliche Wetterinformationen (506) von einem Wetterserver (502); sowie
(B) die empfangenen Höhen- und/oder örtlichen Wetterinformationen direkt zur Änderung einer Kochzeit, eines Kochdrucks oder einer Kombination aus Kochdruck und Kochzeit des Kochskripts (218) ohne weitere Eingaben des Benutzers verwendet werden.

2. Vorrichtung nach Anspruch 1, wobei
die Kochsteuerung (108) ferner derart ausgelegt ist, dass
das von der Computerverarbeitungseinheit (602) übertragene Kochskript (218) drahtlos empfangen wird; und
das Kochskript (218), das drahtlos von der Computerverarbeitungseinheit (602) empfangen wurde, in der Speichereinheit (208) gespeichert wird.

3. Vorrichtung nach Anspruch 1, wobei
das Kochskript (218) ferner so ausgelegt ist, dass es die Kochsteuerung (108) anweist, das Nahrungsmittel auf der Grundlage von Sensormesswerten zu kochen, die vom Sensor gemäß dem im Kochskript (218) enthaltenen Satz der von der Steuerung ausführbaren Befehle, bereitgestellt werden.

4. Vorrichtung nach Anspruch 1, wobei
das Kochskript (218) ferner so ausgelegt ist, dass es auf der Grundlage des Zustands des Nahrungsmittels eingestellt werden kann.

5. Vorrichtung nach Anspruch 1, wobei
das Kochskript (218) ferner so ausgelegt ist, dass es den Betrieb der Kochsteuerung (108) derart steuert, dass entweder die Betriebszeit oder die Heizintensität des Druckkochgeräts (102) als Reaktion darauf angepasst wird, dass die Kochsteuerung (108) einen Sensorwert vom Sensor empfängt und der Sensorwert einen oder mehrere Temperaturwerte, Druckwerte und/oder Feuchtigkeitswerte umfasst.

6. Vorrichtung nach Anspruch 1, wobei
das Kochskript (218) ferner so ausgelegt ist, dass es entweder einen Kochdruck, eine Kochzeit oder eine Kombination aus Kochdruck und Kochzeit des herausnehmbaren inneren Kochtopfs (114) einstellt, indem es den Druck im herausnehmbaren inneren Kochtopf (114) und den Umgebungsdruck, der das Äußeres des Druckkochgeräts (102) umgibt, berücksichtigt.

7. Vorrichtung nach Anspruch 1, wobei
die Kochsteuerung (108) ferner so ausgelegt ist, dass sie zusätzliche Kochverfahren empfängt, die in die Computerverarbeitungseinheit (602) hochgeladen und von einem anderen Exemplar des Druckkochgeräts (102) ausgeführt werden können.

8. Vorrichtung nach Anspruch 1, wobei
die Kochsteuerung (108) Folgendes umfasst:
eine Rezeptsteuerung (320); und
eine Sicherheitssteuerung (316), wobei
die Rezeptsteuerung (320) ferner derart ausgelegt ist, dass
sie das Kochskript (218) mit Kochanleitungen empfängt;
sie das Kochskript (218) ausführt; und
die Sicherheitssteuerung (316) anweist, das im Inneren des herausnehmbaren inneren Kochtopfs (114) aufgenommene Nahrungsmittel so zu kochen, dass die Sicherheitssteuerung (316) einen Kochvorgang am Nahrungsmittel ausführt; und
die Sicherheitssteuerung (316) derart ausgelegt ist, dass
sie die Kochanweisungen von der Rezeptsteuerung (320) empfängt; sie die von der Rezeptsteuerung (320) erhaltenen Kochanweisungen so ausführt, dass das im herausnehmbaren inneren Kochtopf (114) aufgenommene Nahrungsmittel gemäß den Kochanweisungen gekocht wird;
sie ein gewisses Maß an Sicherheit für das Druckkochgerät (102) aufrecht erhält;
sie den Betrieb der Rezeptsteuerung (320) überwacht; und
die Rezeptsteuerung (320) zurücksetzt, sobald die erwarteten Antworten nicht mehr von der Rezeptsteuerung (320) bereitgestellt und empfangen werden.

9. Vorrichtung nach Anspruch 1, wobei
das Kochskript (218) ferner so ausgelegt ist, dass es von einem Koch-Skript-Validierungsdienst validiert wird.

10. Vorrichtung nach Anspruch 1, wobei
das Kochskript (218) ferner so ausgelegt ist, dass es von einem Koch-Skript-Validierungsdienst validiert wird; und der Koch-Skript-Validierungsdienst so ausgelegt ist, dass:
sichergestellt ist, dass das Kochskript (218) für die Verwendung durch die Kochsteuerung (108) sicher ist; und
sichergestellt ist, dass das Kochskript (218) nicht so funktioniert, dass die Kochsteuerung (108) das Druckkochgerät (102) anweisen kann, das Nahrungsmittel zu verderben.

11. Vorrichtung nach Anspruch 1, wobei
die Sensorbaugruppe eine Kombination aus einem thermischen Sensor (304) und einem Drucksensor (306) und einem Feuchtigkeitssensor (307) einschließt.

12. Vorrichtung nach Anspruch 1, wobei
die Benutzersteuervorrichtung (202) ferner derart ausgelegt ist, dass
sie ein Attribut empfängt, das mit mindestens einem oder mehreren zu kochenden Nahrungsmitteln im Zusammenhang steht; und
sie die Kochparameter im Kochskript (218) entsprechend dem Attribut anpasst.

13. Verfahren zum Betreiben einer Vorrichtung (100) zum Kochen eines Nahrungsmittels, wobei die Vorrichtung (100) ein Druckkochgerät (102) umfasst, einschließlich: (A) einer Gehäusebaugruppe (106); (B) einer Heizbaugruppe (302), die in der Gehäusebaugruppe (106) wirksam positioniert ist; (C) eines äußeren Topfs (112), der von der Gehäusebaugruppe (106) wirksam aufgenommen ist, wobei der äußere Topf (112) angrenzend an die Heizbaugruppe (302) positioniert ist; (D) eines herausnehmbaren inneren Kochtopfs (114), der einen Innenraum definiert, wobei der herausnehmbare innere Kochtopf (114) wahlweise vom äußeren Topf (112) der Gehäusebaugruppe (106) derart herausnehmbar und in diesen einsetzbar ist, dass der äußere Topf (112) den herausnehmbaren inneren Kochtopf (114) zumindest teilweise von der Heizbaugruppe (302) trennt, (E) einer Deckelbaugruppe (116), die mit der Gehäusebaugruppe (106) wirksam verbunden ist, wobei die Deckelbaugruppe (116) so ausgelegt ist, dass sie das Innere des herausnehmbaren inneren Kochtopfs (114) wahlweise wirksam sicher verschließt und abdichtet, sobald das Nahrungsmittel im Inneren des herausnehmbaren inneren Kochtopfs (114) wirksam aufgenommen ist, so dass der herausnehmbare innere Kochtopf (114) innen unter Druck gesetzt werden kann; (F) einer Sensorbaugruppe, die im Verhältnis zur Gehäusebaugruppe (106) wirksam angeordnet ist, und wobei die Sensorbaugruppe so ausgelegt ist, dass sie ein erfasstes Attribut bezüglich einer Eigenschaft des Inneren des herausnehmbaren inneren Kochtopfs (114) überwacht, der vom äußeren Topf (112) wirksam aufgenommen wird; (G) einer Kochsteuerung (108), die im Verhältnis zur Gehäusebaugruppe (106) wirksam positioniert ist, wobei die Kochsteuerung (108) mit der Heizbaugruppe (302) und der Sensorbaugruppe wirksam verbunden ist und die Kochsteuerung (108) so ausgelegt ist, dass sie die Heizbaugruppe (302) gemäß einer Heizdauer, einer Heizintensität und dem erfassten Attribut, das von der Sensorbaugruppe bereitgestellt wird, steuert, wobei die Kochsteuerung (108) so ausgelegt ist, dass sie eine Computerverarbeitungseinheit (602) umfasst oder mit einer solchen wirksam verbunden ist; und (H) einer Speichereinheit (208), die im Verhältnis zur Gehäusebaugruppe (106) wirksam angeordnet ist, wobei die Speichereinheit (208) in der Kochsteuerung (108) enthalten oder mit dieser wirksam verbunden ist und die Speichereinheit (208) so ausgelegt ist, dass sie ein Kochskript (218) konkret speichert, wobei das Kochskript (218) einen Satz der von der Steuerung ausführbaren Befehle aufweist, die so ausgelegt sind, dass die Kochsteuerung (108) angewiesen wird, das im herausnehmbaren inneren Kochtopf (114) aufgenommene Nahrungsmittel gemäß dem Satz der von der Steuerung ausführbaren Befehle unter Druck zu kochen, wobei das Verfahren Folgendes umfasst:
wirksames Verbinden der Kochsteuerung (108) mit der Computerverarbeitungseinheit (602) derart, dass die Kochsteuerung (108) das Kochskript (218) von der Computerverarbeitungseinheit (602) empfängt, wobei das Kochskript (218) mit dem Satz der von der Steuerung ausführbaren Befehle ausgelegt ist, so dass es die Kochsteuerung (108) anweist, das Nahrungsmittel, das im herausnehmbaren inneren Kochtopf (114) aufgenommen wird, gemäß dem Satz der von der Steuerung ausführbaren Befehle druckzugaren; und
**dadurch gekennzeichnet, dass** das Verfahren weiterhin Folgendes umfasst:
Ausführen des Kochskripts (218) mit dem Satz der von der Steuerung ausführbaren Befehle derart, dass die Kochsteuerung (108) gemäß dem Satz der von der Steuerung ausführbaren Befehle zum Druckgaren des im herausnehmbaren inneren Kochtopf (114) aufgenommenen Nahrungsmittels angewiesen wird; und
Kommunizieren mit der Kochsteuerung (108) über eine Benutzersteuervorrichtung (202), wobei die Benutzersteuervorrichtung (202) so ausgelegt ist, dass sie (a) die Fähigkeit, den Inhalt des Kochskripts (218) zu programmieren und zu ändern, ermöglicht, und (b) das Kochskript (218) über ein Netzwerk in einer solchen Weise hochlädt, dass das Kochskript (218) über das Netzwerk gemeinsam genutzt wird; und
Empfangen des Kochskripts (218), das von den Benutzern erarbeitet wird; und
gemeinsames Nutzen des Kochskripts (218) mit anderen Benutzern, die ihr eigenes Exemplar des Druckkochgeräts (102) besitzen, über das Netzwerk; und
Anfordern und Empfang einer oder mehrerer der folgenden Informationen über eine Netzwerkverbindung: i) Positionsinformationen (514), einschließlich Höheninformationen, von einem Positionsserver (512); und örtliche Wetterinformationen (506) von einem Wetterserver (502); sowie
direktes Verwenden der empfangenen Höhen- und/oder örtlichen Wetterinformationen zur Änderung einer Kochzeit, eines Kochdrucks oder einer Kombination aus Kochdruck und Kochzeit des Kochskripts (218) ohne weitere Eingaben des Benutzers.

## Revendications

1. Appareil de cuisson d'une denrée alimentaire, l'appareil (100) comprenant :
un appareil de cuisson sous pression (102), comportant :
un ensemble boîtier (106) ;
un ensemble chauffant (302) positionné de manière fonctionnelle dans l'ensemble boîtier (106) ;
un récipient extérieur (112) reçu de manière fonctionnelle par l'ensemble boîtier (106), le récipient extérieur (112) étant positionné de manière adjacente à l'ensemble chauffant (302) ;
un récipient de cuisson intérieur amovible (114) définissant un intérieur, le récipient de cuisson intérieur amovible (114) pouvant être retiré du récipient extérieur (112) de l'ensemble boîtier (106) et inséré dans celui-ci, de manière sélective, le récipient extérieur (112) étant positionné, au moins en partie, entre le récipient de cuisson intérieur amovible (114) et l'ensemble chauffant (302) et les séparant au moins en partie, une fois que le récipient de cuisson intérieur amovible (114) est inséré dans le récipient extérieur (112) ;
un ensemble couvercle (116) conçu pour pouvoir être raccordé de manière fonctionnelle à l'ensemble boîtier (106), l'ensemble couvercle (116) étant conçu pour pouvoir fermer et sceller hermétiquement, de manière fonctionnelle et sélective, l'intérieur du récipient de cuisson intérieur amovible (114) une fois que la denrée alimentaire est reçue de manière fonctionnelle à l'intérieur du récipient de cuisson intérieur amovible (114) de sorte que le récipient de cuisson intérieur amovible (114) peut être mis sous pression depuis l'intérieur ;
un ensemble capteur positionné de manière fonctionnelle par rapport à l'ensemble boîtier (106), l'ensemble capteur étant conçu pour surveiller un attribut détecté concernant un attribut de l'intérieur du récipient de cuisson intérieur amovible (114) reçu de manière fonctionnelle par le récipient extérieur (112) ;
un contrôleur de cuisson (108) positionné de manière fonctionnelle par rapport à l'ensemble boîtier (106), le contrôleur de cuisson (108) étant raccordé de manière fonctionnelle à l'ensemble chauffant (302) et à l'ensemble capteur, et le contrôleur de cuisson (108) étant conçu pour contrôler l'ensemble chauffant (302) en fonction d'une durée de chauffage, d'une intensité de chauffage et de l'attribut détecté fourni par l'ensemble capteur, et le contrôleur de cuisson (108) étant conçu pour comprendre une unité de traitement informatique (602), ou pour se raccorder de manière fonctionnelle à celle-ci, de sorte que le contrôleur de cuisson (108) reçoit un script de cuisson (218) provenant de l'unité de traitement informatique (602), et le script de cuisson (218) contenant un ensemble d'instructions exécutables par le contrôleur étant conçu pour guider le contrôleur de cuisson (108) pour qu'il cuise sous pression la denrée alimentaire reçue par le récipient de cuisson intérieur amovible (114) conformément à l'ensemble d'instructions exécutables par le contrôleur ; et
une unité de mémoire (208) positionnée de manière fonctionnelle par rapport au contrôleur de cuisson (108), l'unité de mémoire (208) étant comprise dans le contrôleur de cuisson (108), ou raccordée de manière fonctionnelle à celui-ci, et l'unité de mémoire (208) étant conçue pour sauvegarder concrètement le script de cuisson (218), le script de cuisson (218) contenant l'ensemble d'instructions exécutables par le contrôleur étant conçu pour guider le contrôleur de cuisson (108) pour qu'il cuise sous pression la denrée alimentaire reçue par le récipient de cuisson intérieur amovible (114) conformément à l'ensemble d'instructions exécutables par le contrôleur ; et **caractérisé en ce que** l'appareil de cuisson sous pression (102) comprend en outre :
un dispositif de commande par l'utilisateur (202) conçu pour (A) communiquer avec le contrôleur de cuisson (108), (B) faciliter la programmation et la modification des contenus du script de cuisson (218), et (C) charger le script de cuisson (218) via un réseau de sorte que le script de cuisson (218) est partagé via le réseau ; et
dans lequel :
le script de cuisson (218) est en outre conçu pour être préparé par les utilisateurs ; et
le script de cuisson (218) est en outre conçu pour être partagé en réseau avec d'autres utilisateurs ayant leur propre instance de l'appareil de cuisson sous pression (102) ; et
le code exécutable du contrôleur de cuisson (108) ou du dispositif de commande par l'utilisateur (202) est conçu pour :
(A) demander et recevoir, via une connexion réseau, un ou plusieurs éléments parmi : des informations de position (514), y compris des informations d'altitude, provenant d'un serveur de position (512) ; et ii) des informations météorologiques locales (506) provenant d'un serveur météorologique (502) ; et
(B) utiliser les informations d'altitude et/ou les informations météorologiques locales reçues pour modifier un temps de cuisson, une pression de cuisson ou une combinaison de la pression de cuisson et du temps de cuisson du script de cuisson (218) à la volée sans que l'utilisateur ne définisse quoi que ce soit.

2. Appareil selon la revendication 1, dans lequel :
le contrôleur de cuisson (108) est en outre conçu pour :
recevoir sans fil le script de cuisson (218) transmis par l'unité de traitement informatique (602) ; et
sauvegarder le script de cuisson (218) reçu sans fil par l'unité de traitement informatique (602) dans l'unité de mémoire (208).

3. Appareil selon la revendication 1, dans lequel :
le script de cuisson (218) est en outre conçu pour guider le contrôleur de cuisson (108) pour qu'il cuise la denrée alimentaire en fonction des relevés de capteur fournis par le capteur, conformément à l'ensemble d'instructions exécutables par le contrôleur contenues dans le script de cuisson (218).

4. Appareil selon la revendication 1, dans lequel :
le script de cuisson (218) est en outre conçu pour pouvoir être ajusté en fonction de l'état de la denrée alimentaire.

5. Appareil selon la revendication 1, dans lequel :
le script de cuisson (218) est en outre conçu pour commander le fonctionnement du contrôleur de cuisson (108) de sorte à adapter le temps de fonctionnement ou l'intensité de chauffage de l'appareil de cuisson sous pression (102) en réponse à la réception par le contrôleur de cuisson (108) d'un relevé provenant du capteur, et le relevé de capteur inclut un ou plusieurs éléments parmi un relevé de température, un relevé de pression et/ou un relevé d'humidité.

6. Appareil selon la revendication 1, dans lequel :
le script de cuisson (218) est en outre conçu pour ajuster la pression de cuisson, le temps de cuisson ou une combinaison de la pression de cuisson et du temps de cuisson du récipient de cuisson intérieur amovible (114) en tenant compte de la pression à l'intérieur du récipient de cuisson intérieur amovible (114) et de la pression ambiante entourant un extérieur de l'appareil de cuisson sous pression (102).

7. Appareil selon la revendication 1, dans lequel :
le contrôleur de cuisson (108) est en outre conçu pour recevoir des procédures de cuisson supplémentaires à charger dans l'unité de traitement informatique (602) et à exécuter par une autre instance de l'appareil de cuisson sous pression (102).

8. Appareil selon la revendication 1, dans lequel :
le contrôleur de cuisson (108) comprend :
un contrôleur de recette (320) ; et
un contrôleur de sécurité (316) ;
le contrôleur de recette (320) étant conçu pour :
recevoir le script de cuisson (218) contenant les instructions de cuisson ;
exécuter le script de cuisson (218) ; et
donner l'ordre au contrôleur de sécurité (316) de cuire la denrée alimentaire reçue à l'intérieur du récipient de cuisson intérieur amovible (114) de sorte que le contrôleur de sécurité (316) effectue une opération de cuisson sur la denrée alimentaire ; et
le contrôleur de sécurité (316) étant conçu pour :
recevoir les instructions de cuisson provenant du contrôleur de recette (320) ;
exécuter les instructions de cuisson reçues depuis le contrôleur de recette (320) de telle sorte que la denrée alimentaire reçue dans le récipient de cuisson intérieur amovible (114) est cuite conformément aux instructions de cuisson ;
maintenir un niveau de sécurité pour l'appareil de cuisson sous pression (102) ;
surveiller le fonctionnement du contrôleur de recette (320) ; et
réinitialiser le contrôleur de recette (320) lorsque les réponses attendues ne sont pas fournies par le contrôleur de recette (320) et reçues en provenance de celui-ci.

9. Appareil selon la revendication 1, dans lequel :
le script de cuisson (218) est en outre conçu pour être validé par un service de validation de script de cuisson.

10. Appareil selon la revendication 1, dans lequel :
le script de cuisson (218) est en outre conçu pour être validé par un service de validation de script de cuisson, et le service de validation de script de cuisson est conçu pour :
s'assurer que le script de cuisson (218) peut être utilisé en toute sécurité par le contrôleur de cuisson (108) ; et
s'assurer que le script de cuisson (218) ne fonctionne pas de sorte à permettre au contrôleur de cuisson (108) d'ordonner à l'appareil de cuisson sous pression (102) d'endommager la denrée alimentaire.

11. Appareil selon la revendication 1, dans lequel :
l'ensemble capteur comprend une combinaison d'un capteur thermique (304), d'un capteur de pression (306) et d'un capteur d'humidité (307).

12. Appareil selon la revendication 1, dans lequel :
le dispositif de commande par l'utilisateur (202) est en outre conçu pour :
recevoir un attribut associé à au moins une ou plusieurs denrées alimentaires à cuire ; et
ajuster les paramètres de cuisson dans le script de cuisson (218) en fonction de l'attribut.

13. Procédé d'utilisation d'un appareil (100) de cuisson d'une denrée alimentaire, l'appareil (100) comprenant un appareil de cuisson sous pression (102), comprenant : (A) un ensemble boîtier (106) ; (B) un ensemble chauffant (302) positionné de manière fonctionnelle dans l'ensemble boîtier (106); (C) un récipient extérieur (112) reçu de manière fonctionnelle par l'ensemble boîtier (106), le récipient extérieur (112) étant positionné de manière adjacente à l'ensemble chauffant (302) ; (D) un récipient de cuisson intérieur amovible (114) définissant un intérieur, le récipient de cuisson intérieur amovible (114) pouvant être retiré du récipient extérieur (112) de l'ensemble boîtier (106) et inséré dans celui-ci, de manière sélective, de telle sorte que le récipient extérieur (112) sépare, au moins en partie, le récipient de cuisson intérieur amovible (114) de l'ensemble chauffant (302), (E) un ensemble couvercle (116) raccordé de manière fonctionnelle à l'ensemble boîtier (106), l'ensemble couvercle (116) étant conçu pour fermer et sceller hermétiquement, de manière fonctionnelle et sélective, l'intérieur du récipient de cuisson intérieur amovible (114) une fois que la denrée alimentaire est reçue de manière fonctionnelle à l'intérieur du récipient de cuisson intérieur amovible (114) de sorte que le récipient de cuisson intérieur amovible (114) peut être mis sous pression depuis l'intérieur ; (F) un ensemble capteur positionné de manière fonctionnelle par rapport à l'ensemble boîtier (106), l'ensemble capteur étant conçu pour surveiller un attribut détecté concernant un attribut de l'intérieur du récipient de cuisson intérieur amovible (114) reçu de manière fonctionnelle par le récipient extérieur (112) ; (G) un contrôleur de cuisson (108) positionné de manière fonctionnelle par rapport à l'ensemble boîtier (106), le contrôleur de cuisson (108) étant raccordé de manière fonctionnelle à l'ensemble chauffant (302) et à l'ensemble capteur, et le contrôleur de cuisson (108) étant conçu pour contrôler l'ensemble chauffant (302) en fonction d'une durée de chauffage, d'une intensité de chauffage et de l'attribut détecté fourni par l'ensemble capteur, et le contrôleur de cuisson (108) étant conçu pour comporter une unité de traitement informatique (602) ou être raccordé de manière fonctionnelle à celle-ci ; et (H) une unité de mémoire (208) positionnée de manière fonctionnelle par rapport à l'ensemble boîtier (106), l'unité de mémoire (208) étant comprise dans le contrôleur de cuisson (108) ou raccordée de manière fonctionnelle à celui-ci, et l'unité de mémoire (208) étant conçue pour sauvegarder concrètement un script de cuisson (218), le script de cuisson (218) contenant un ensemble d'instructions exécutables par le contrôleur étant conçu pour guider le contrôleur de cuisson (108) pour qu'il cuise sous pression la denrée alimentaire reçue par le récipient de cuisson intérieur amovible (114) conformément à l'ensemble d'instructions exécutables par le contrôleur, et le procédé comportant :
le raccordement, de manière fonctionnelle, du contrôleur de cuisson (108) à l'unité de traitement informatique (602) de sorte que le contrôleur de cuisson (108) reçoit le script de cuisson (218) provenant de l'unité de traitement informatique (602), et le script de cuisson (218) contenant l'ensemble d'instructions exécutables par le contrôleur étant conçu pour guider le contrôleur de cuisson (108) pour qu'il cuise sous pression la denrée alimentaire reçue par le récipient de cuisson intérieur amovible (114) conformément à l'ensemble d'instructions exécutables par le contrôleur ; et
**caractérisée en ce que** le procédé comprend en outre :
l'exécution du script de cuisson (218) contenant l'ensemble d'instructions exécutables par le contrôleur de sorte que le contrôleur de cuisson (108) est guidé pour cuire sous pression la denrée alimentaire reçue par le récipient de cuisson intérieur amovible (114) conformément à l'ensemble d'instructions exécutables par le contrôleur ; et
la communication avec le contrôleur de cuisson (108) via un dispositif de commande par l'utilisateur (202), le dispositif de commande par l'utilisateur (202) étant conçu pour (a) faciliter la programmation et la modification des contenus du script de cuisson (218), et (b) charger le script de cuisson (218) via un réseau de sorte que le script de cuisson (218) est partagé via le réseau ; et
la réception du script de cuisson (218) qui est préparé par les utilisateurs ; et
le partage du script de cuisson (218), via le réseau, avec d'autres utilisateurs ayant leur propre instance de l'appareil de cuisson sous pression (102) ; et
la demande ou la réception, via une connexion réseau, d'un ou plusieurs éléments parmi i) des informations de position (514), y compris des informations d'altitude, provenant d'un serveur de position (512) et des informations météorologiques locales (506) provenant d'un serveur météorologique (502) ; et
l'utilisation des informations d'altitude et/ou des informations météorologiques locales reçues pour modifier un temps de cuisson, une pression de cuisson ou une combinaison de la pression de cuisson et du temps de cuisson du script de cuisson (218) à la volée sans que l'utilisateur ne définisse quoi que ce soit.
